# EUROPEAN PATENT SPECIFICATION

(11) **EP 1 284 570 B1**
(45) Date of publication and mention of the grant of the patent: **02.08.2006**
(21) Application number: 02018119.4
(22) Date of filing: 13.08.2002
(51) Int. Cl.: H04L 29/06, H04L 12/58, H04L 12/22, H04L 12/56, H04L 29/08

(54) **System and method for pushing encrypted information between a host system and a mobile data communication device**
Verfahren und Vorrichtung zur Sendung von verschlüsselten Informationen von einem Wirtrechnersystem zu einem mobilen Datenkommunikationsgerät
Système et procédé permettant de transferer des informations chiffrées dans un dispositif de communication de données mobile à partir d'un système hôte

(30) Priority: 13.08.2001 US 928983
(43) Date of publication of application: 19.02.2003
(73) Proprietor: Research In Motion Limited, Waterloo, Ontario N2L 3W8 (CA)
(72) Inventor: Gilhuly, Barry J., Waterloo, Ontario N2K 3P8 (CA); Ahn Van, Ngoc, Brantford, Ontario N3R 5J7 (CA); Rahn, Steven M., Elora, Ontario N0B 1S0 (CA); Mousseau, Gary P., Waterloo, Ontario N2T 1H7 (CA); Lazaridis, Mihal, Waterloo, Ontario N2T 2K1 (CA)
(74) Representative: Jones Day

(56) References cited:
- WO-A-00/31931
- WO-A-01/22669
- US-B1- 6 229 894
- MARSHALL G.: "HushMail Version 2.0" SC ONLINE MAGAZINE, [Online] July 2001 (2001-07), XP002253222 Retrieved from the Internet: <URL:http://www.scmagazine.com/scmagazine/ sc-online/2001/review/036/product.html> [retrieved on 2003-09-01]

## Description

### BACKGROUND OF THE INVENTION

### 1. Field of the Invention

The present invention is directed toward the field of redirecting information between a host system and a mobile data communication device.

### 2. Description of the Related Art

Present systems and methods for replicating information from a host system to a user's mobile data communication device are typically "synchronization" systems in which the user's data items are warehoused (or stored) at the host system for an indefinite period of time until the user synchronizes the mobile device to the host system. In these types of systems and methods, when replication of the warehoused data items to the mobile device is desired, the user typically places the mobile device in an interface cradle that is electrically connected to the host system via some form of local, dedicated communication, such as a serial cable or an infrared or other type of wireless link. Software executing on the mobile data communication device then transmits commands via the local communications link to the host system to cause the host to begin transmitting the user's data items for storage in a memory bank of the mobile device.

In these synchronization schemes, the mobile unit "pulls" the warehoused information from the host system in a batch-mode each time the user desires to replicate information between the two devices. Thus, the two systems (host and mobile) maintain the same data items only after a user-initiated synchronization sequence.

A general problem with these synchronization systems is the fact that the data in the mobile device is only current at the moment of synchronization with the host. Five minutes later a new message could be sent to the user, but the user would not receive that message until the next time the systems are synchronized. Thus, a user may fail to respond to an emergency update or message because the user only periodically synchronizes the system, such as once per day.

Other problems with these systems include: (1) the amount of data to be reconciled between the host and the mobile device can become large if the user does not "synchronize" on a daily or hourly basis, leading to bandwidth difficulties, particularly when the mobile device is communicating via a wireless packet-switched network; and (2) reconciling large amounts of data, as can accrue in these batch-mode synchronization systems, can require a great deal of communication between the host and the mobile device, thus leading to a more complex, costly and energy-inefficient system.

Thus, there is a general need in this field for a more automated, continuous, efficient, flexible, and reliable system of ensuring that user data items are replicated (in real time) at the user's mobile device.

WO-01/22669 discloses a method of redirecting data items from a messaging host system to a user's mobile device according to the preamble of the independent claims.

US 6,229,894 relates to a method and apparatus for accessing user specific encryption information. based on the identity of a requesting entity and/or the type of request, a server determines the requesting entity's authorized level of access to user specific encryption information. Based on the authorized level of access, the requesting entity is provided with controlled access to the user specific information.

A common problem encountered in securing the communications during redirecting data items from a messaging host system to a user's mobile device relates to providing the required decryption key to the mobile device.

### SUMMARY OF THE INVENTION

A system and method for redirecting data items from a messaging host system to a user's mobile device upon sensing a triggering event is provided. A redirector program operating at the host system enables a user to continuously redirect certain user-selected data items from the host system to the user's mobile data communication device upon detecting that one or more user-defined triggering events has occurred. The redirector program operates in connection with event generating applications and repackaging systems at the host system to configure and detect a particular user-defined event, and then to repackage the user-selected data items in an electronic wrapper prior to pushing the data items to the mobile device.

Using the redirector program, the user can select certain data items for redirection, such as E-mail messages, calendar events, meeting notifications, address entries, journal entries, personal reminders etc. Having selected the data items for redirection, the user can then configure one or more event triggers to be sensed by the redirector program, which then initiates redirection of the user data items upon sensing one or more of the event triggers. These user-defined trigger points (or event triggers) may be external events, internal events or networked events. Once an event has triggered redirection of the user data items, the host system then repackages these items in a manner that is transparent to the mobile data communication device, so that information on the mobile device appears similar to information on the user's host system.

The redirector program may further provide a set of software-implemented control functions for determining the type of mobile data communication device and its address, for programming a preferred list of message types that are to be redirected, and for determining whether the mobile device can receive and process certain types of message attachments, such as word processor or voice attachments. The mobile device control functions are initially set by the user of the mobile device at the host system. These functions can then be altered on a global or per message basis by transmitting a command message from the mobile device to the host system.

The redirector program may further execute on a network server, and the server is programmed to detect numerous redirection event triggers over the network from multiple user desktop computers coupled to the server via a local-area-network ("LAN"). The server can receive internal event triggers from each of the user desktops via the network, and can also receive external event triggers, such as messages from the users' mobile data communication devices. In response to receiving one of these triggers, the server redirects the user's data items to the proper mobile data communication device. This alternative configuration could also include an Internet or Intranet-located web server including the redirector program that could be accessible through a secure Web page or other user interface. In this configuration, the redirector program could be located on an Internet Service Provider ("ISP") system or an Application Service Provider ("ASP") system, and the user would configure (and reconfigure) the program controls over an Internet connection to the ISP or ASP system.

The redirector program may operate at both the host system and at the user's mobile data communication device. In this configuration, the user's mobile device operates similarly to the host system described below, and is configured in a similar fashion to push certain user-selected data items from the mobile device to the user's host system (or some other computer) upon detecting an event trigger at the mobile device. This configuration provides two-way pushing of information from the host to the mobile device and from the mobile device to the host.

A primary advantage of these configurations is that it provides a system and method for triggering the continuous and real-time redirection of user-selected data items from a host system to a mobile data communication device. Other advantages include: (1) flexibility in defining the types of user data to redirect, and in defining a preferred list of message types that are to be redirected or preferred senders whose messages are to be redirected; (2) flexibility in configuring the system to respond to numerous internal, external and networked triggering events; (3) transparent repackaging of the user data items in a variety of ways such that the mobile data communication device appears as though it were the host system; (4) integration with other host system components such as E-mail, TCP/IP, keyboard, screen saver, Web pages and certain programs that can either create user data items or be configured to provide trigger points; and (5) the ability to operate locally on a user's desktop system or at a distance via a network server or through a secure Internet connection.

A method of redirecting data items from a messaging host system to a user's mobile device in accordance with an aspect of the invention comprises the steps of detecting a new data item for the user at the messaging host system, forwarding a copy of the new data item to a redirector host system, determining whether the new data item should be redirected from the redirector host system to the user's mobile device, and if the new data item should be redirected, then encrypting the new data item to form an encrypted new data item and packaging the encrypted new data item into an electronic envelope and transmitting the electronic envelope to the user's mobile device. A new data item is preferably also stored in a user's inbox coupled to the messaging host system. New data items may be detected at the host system by determining whether a new data item has been received at the messaging host system for a particular user and checking a forwarding file coupled to the messaging host system to determine whether the particular user's data items should be redirected to the redirector host system. A set of filtering rules, which are preferably remotely configurable by a user, may be applied by the redirector host system in determining whether a new data item should be redirected to the user's mobile device. A configurable activation/deactivation switch is also preferably provided for turning on/off the operation of the redirector host system for a particular user.

At the user's mobile device, the steps of receiving the electronic envelope, extracting the encrypted new data item from the electronic envelope and decrypting the encrypted new data item to recover the new data item are performed. The decrypting step comprises the step of using a cipher algorithm and a decryption key to decrypt the encrypted new data item. At the redirector host system, the encrypting step similarly involves a cipher algorithm and an encryption key. The encryption and decryption keys are generated at a computer system associated with the mobile device. Public key cryptographic operations are also contemplated.

In a preferred embodiment, the data items are E-mail messages, and the messaging host system is an E-mail host system. In a further embodiment, the messaging host system is an Internet Service Provider.

According to another embodiment, a method of redirecting E-mail messages from a messaging host system to a user's wireless mobile device comprises the steps of detecting an E-mail message for the user at the messaging host system, forwarding a copy of the E-mail message from the messaging host system to a wireless redirector host system, receiving the forwarded E-mail message at the wireless redirector host system and applying a set of user-defined filtering rules that determine whether or not to redirect the E-mail to the user's wireless mobile device via a wireless network coupled to the wireless redirector host system, and if the filtering rules determine that the E-mail message is of the type that should be redirected, then encrypting the E-mail message to form an encrypted E-mail message and redirecting the encrypted E-mail message to the user's wireless mobile device by packaging the encrypted E-mail message in an electronic envelope that includes a wireless network address of the user's wireless mobile device.

A system for redirecting data items from a network to a user's wireless mobile device in accordance with an aspect of the invention comprises a messaging host system coupled to the network for receiving data items associated with a particular user and for forwarding the received data items to a predetermined address on the network and a redirector host system associated with the predetermined address for receiving the forwarded data items from the messaging host system and for encrypting and redirecting those data items to the user's wireless mobile device. The messaging host system may include a sendmail program for receiving and transmitting user data items and a forwarding file containing a list of authorized users of the system, and the predetermined address to which the messaging host system will forward each user's data items. The redirector host system preferably comprises an encryption module that encrypts the forwarded data items from the messaging host system, and the mobile device preferably comprises a decryption module. Encryption and decryption keys used by these modules may be generated and distributed via any of the mechanisms described above.

A method of operating a host system may be configured to redirect E-mail messages from the Internet to a user's wireless mobile device, the method comprising the steps of receiving an E-mail message from the Internet for a particular user, accessing a user profile database to determine whether the particular user is an authorized user of the host system, if the user is an authorized user, then accessing a filter rules database to apply a set of user-defined filtering rules to the E-mail message that dictate whether the E-mail message is the type of message that the user wants to have redirected to its wireless mobile device, and if the E-mail message clears the filtering rules, then encrypting the E-mail message and repackaging the encrypted E-mail message into an electronic envelope including the address of the user's wireless mobile device and forwarding the electronic envelope to a wireless gateway system for transmission onto a wireless data network associated with the user's wireless mobile device.

A method for redirecting messages between an ISP host system and a plurality of mobile data communication devices comprises the steps of configuring redirection settings for one or more mobile device users at the host system, receiving incoming messages directed to a first address at the ISP host system from a plurality of message senders, in response to the redirection setting, continuously encrypting and redirecting the incoming messages from the ISP host system to the mobile data communication device via a redirector host system, receiving encrypted outgoing messages generated and encrypted at the mobile communications device at the redirector host system, decrypting the received encrypted outgoing messages to recover the outgoing messages, configuring address information of the outgoing messages so that the first address is used as an originating address of the outgoing messages, and transmitting the configured outgoing messages to message recipients.

A further method of redirecting electronic data items from a host system associated with a user to the user's mobile data communication device comprises the steps of configuring an external redirection event at the host system, wherein the external redirection event is the host system sensing whether the user is in the physical vicinity of the host system, receiving electronic data items at the host system, and if the host system senses that the user is not in the physical vicinity of the host system, then continuously encrypting the electronic data items and redirecting the encrypted data items to the user's mobile data communication device until the host system senses that the user is in the vicinity of the host system. The sensing may be achieved by a heat sensor detecting a lack of heat emitted by the user, by a motion sensor detecting a lack of motion by the user, or by removal of the mobile device from a mobile device cradle connected to the host system for example.

In a system for redirecting data items between a host system and a mobile communications device through a redirector system, a method of key distribution comprises the steps of generating an encryption key for encrypting data items to be redirected to the mobile device, generating a decryption key for decrypting encrypted and redirected data items received at the mobile device, and forwarding the decryption key to the mobile device using a secure communications link. The steps of generating the encryption key and generating the decryption key may be performed at the redirector system, at the host system, at a computer system operatively connected to the host system or at the device. The encryption key and the decryption key may both be private keys, or the encryption key may be a public key and the decryption may be a private key of a key pair. Data items to be sent from the mobile device may be encrypted at the device using a second encryption key and decrypted when received at the redirector system using a second decryption key.

A key distribution system in a system for redirecting data items between a host system and a mobile communications device through a redirector system comprises means for generating an encryption key for encrypting data items prior to redirection to the mobile device, means for generating a decryption key for decrypting encrypted and redirected data items received at the mobile device, and means for forwarding the decryption key to the mobile device using a secure communications link.

These are just a few of the many advantages of the present invention, as described in more detail below. As will be appreciated, the invention is capable of other and different embodiments, and its several details are capable of modifications in various respects, all without departing from the spirit of the invention. Accordingly, the drawings and description of the preferred embodiments set forth below are to be regarded as illustrative in nature and not restrictive.

### BRIEF DESCRIPTION OF THE DRAWINGS

The present invention satisfies the needs noted above as will become apparent from the following description when read in conjunction with the accompanying drawings wherein:
FIG. 1 is a system diagram showing the redirection of user data items from a user's desktop PC (host system) to the user's mobile data communication device, where the redirector software is operating at the user's desktop PC;
FIG. 2 is a system diagram showing the redirection of user data items from a network server (host system) to the user's mobile data communication device, where the redirector software is operating at the server;
FIG. 3 is a block diagram showing the interaction of the redirector software with other components of the host system in FIG. 1 (the user's desktop PC) to enable the pushing of information from the host system to the user's mobile data communication device;
FIG. 4 is a flow chart showing the steps carried out by the redirector software operating at the host system;
FIG. 5 is a flow chart showing the steps carried out by the mobile data communication device to interface with the redirector software operating at the host system;
FIG. 6 is a system diagram showing the redirection of user data items from a user's host system to the user's mobile data communication device, where the redirector software is operating at the wireless redirector host system;
FIG. 7 is a block diagram showing the interaction of the redirector software with other components of the host system in FIG. 6 to enable the pushing of information from the host system to the user's mobile data communications device;
FIG. 8 is a flow chart showing the steps carried out by the redirector software operating at the wireless redirector host system.
FIG. 9 is a block diagram showing the interaction of the redirector send agent software with other components of the host systems to enable the pushing of information from the host system to the user's mobile data communications device;
FIG. 10 is a block diagram showing the interaction of the redirector receive agent software with other components of the host systems to enable the pushing of information to the Internet from the user's mobile data communications device;
FIG. 11 is a flowchart showing the steps carried out by the redirector receive agent operating at the redirector agent host server in the case of redirecting E-mail messages with domain-massaging and tag line customisation;
FIG. 12 is a hierarchical view of an example of the different types of domains, represented by sites, which can interface with a single redirector system;
FIG. 13 is a system diagram showing the redirection of user data items from a user's host system to the user's mobile data communication device, where the redirector software encrypts redirected data items;
FIG. 14 is a system diagram similar to FIG. 13, but showing the redirector software as part of an integrated messaging/redirection host system;
FIG. 15 is a block diagram showing the interaction of redirector software with other components of the messaging host system in FIG. 14 to enable the pushing of information from the host system to the user's mobile data communications device and from the device to the host system;
FIG. 16 is a block diagram showing the interaction of distributed redirector agent software components with other components of the host system, including multiple domain systems hosted by a service provider that operates the redirector software;
FIG. 17 is a hierarchical view of an example of different types of domains, represented by sites, which can interface with a single integrated redirector system;
FIG. 18 is a block diagram showing the interaction of an integrated messaging/redirection software with other components of an external host system to enable the pushing of information from the host system to the user's mobile data communications device through the integrated messaging/redirection system; and
FIG. 19 is a block diagram showing a variation of the system in FIG. 18, wherein the redirector software shares messaging components with the messaging system.

### DETAILED DESCRIPTION OF THE DRAWINGS

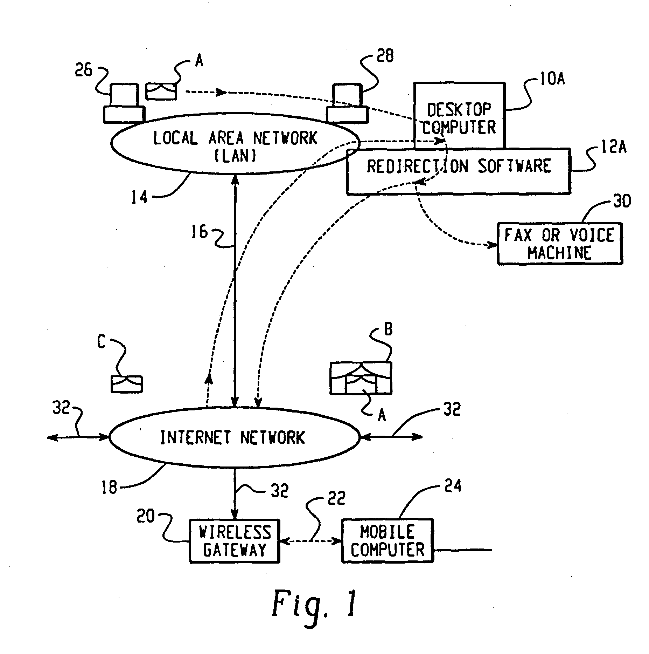

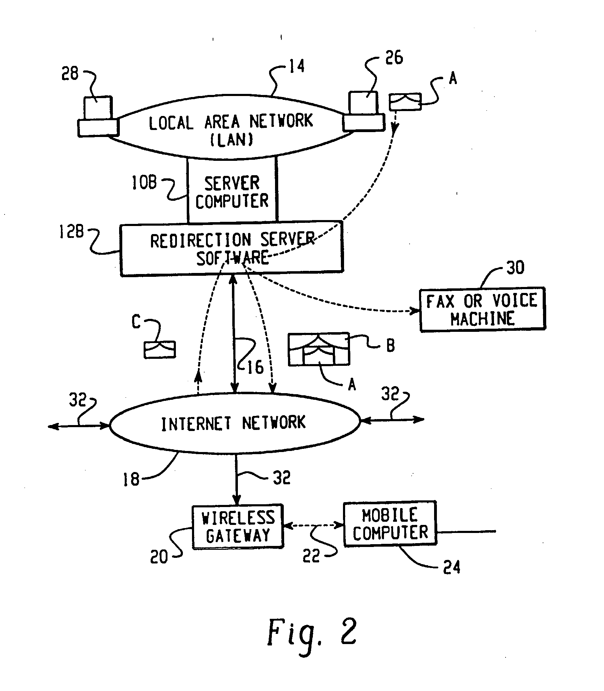

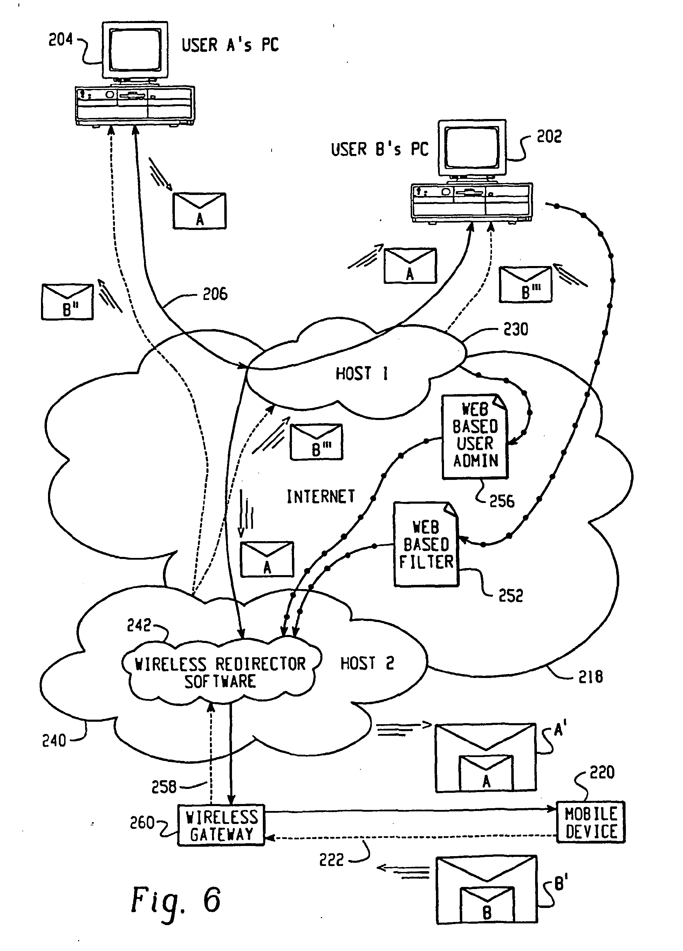

Referring now to the drawings, FIG. 1 is an example system diagram showing the redirection of user data items (such as message A or C) from a user's desktop PC (host system) 10A to the user's mobile data communication device 24, where the redirector software 12 is operating at the user's PC 10A. As used in this application, the term "host system" refers to the computer where the redirector software is operating. The host system is a user's desktop PC 10A. Alternatively, however, the host system could be a network server (10B, see FIG. 2) connected to the user's PC via a local-area network ("LAN"), or it could be a Web server (240, see FIG. 6) operating through a secure network connection or operating at an external ISP, or the host system could be any other system that is capable of communicating with the user's desktop PC.

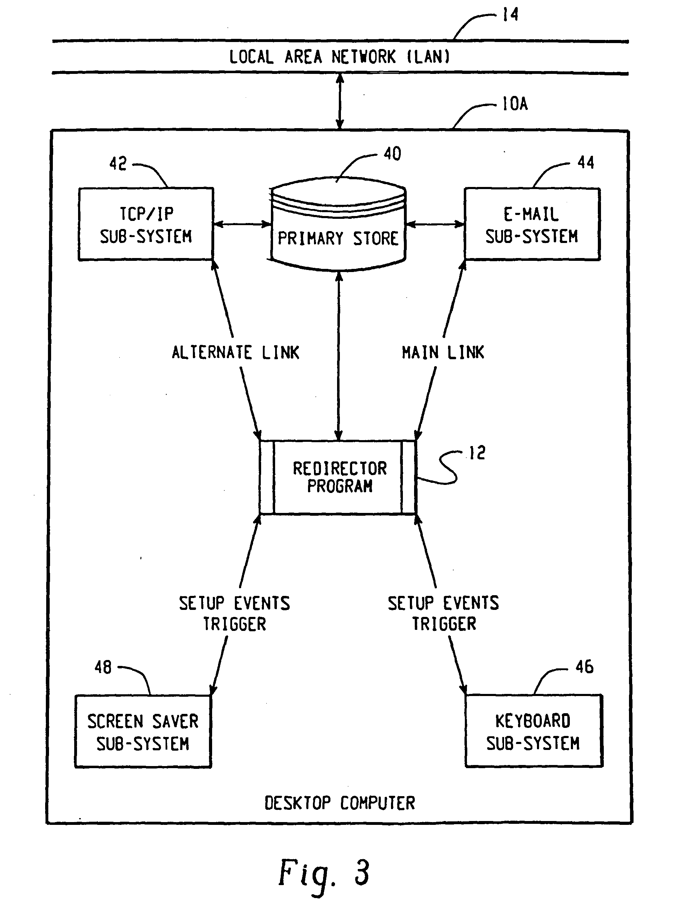

Message A in FIG. 1 represents an internal message sent from desktop 26 to the user's host system 10A via LAN 14. Message C in FIG. 1 represents an external message from a sender that is not directly connected to LAN 14, such as the user's mobile data communication device 24, some other user's mobile device (not shown), or any user connected to the Internet 18. Message C also represents a command message from the user's mobile data communication device 24 to the host system 10A. As described in more detail in FIG. 3, the desktop host system 10A preferably includes, along with the typical hardware and software associated with a workstation or desktop computer, the redirector program 12, a TCP/IP subsystem 42, a primary message store 40, an E-mail subsystem 44, a screen saver subsystem 48, and a keyboard subsystem 46.

In FIG. 1, the host system 10A is the user's desktop system, typically located in the user's office. The desktop host system 10A is connected to a LAN 14, which also connects to other computers 26, 28 that may be in the user's office or elsewhere. The LAN 14, in turn, is connected to a wide area network ("WAN") 18, preferably the Internet, which is defined by the use of the Transmission Control Protocol/Internet Protocol ("TCP/IP") to exchange information, but which, alternatively, could be any other type of WAN. The connection of the LAN 14 to the WAN 18 is via high bandwidth link 16, typically a T1 or T3 connection. The WAN 18 in turn is connected to a variety of gateways 20, via connections 32. A gateway forms a connection or bridge between the WAN 18 and some other type of network, such as an RF wireless network, cellular network, satellite network, or other synchronous or asynchronous land-line connection.

In the example of FIG. 1, a wireless gateway 20 is connected to the Internet for communicating via wireless link 22 to a plurality of wireless mobile data communication devices 24. Also shown in FIG. 1 is machine 30, which could be a FAX machine, a printer, a system for displaying images (such as video) or a machine capable of processing and playing audio files, such as a voice mail system.

The system includes the ability to redirect certain message attachments to such an external machine 30 if the redirector program configuration data reflects that the mobile device 24 cannot receive and process the attachments, or if the user has specified that certain attachments are not to be forwarded to mobile device 24, even if such device can process those attachments. By way of example, consider an E-mail sent to a user that includes three attachments -- a word processing document, a video clip and an audio clip. The redirection program 12 could be configured to send the text of the E-mail to the remote device 24, to send the word processing document to a networked printer located near the user, to send the video clip to a memory store accessible through a secure connection through the internet and to send the audio clip to the user's voice mail system. This example is not intended to limit the breadth and scope of the invention, but rather to illustrate the variety of possibilities embodied in the redirection concept.

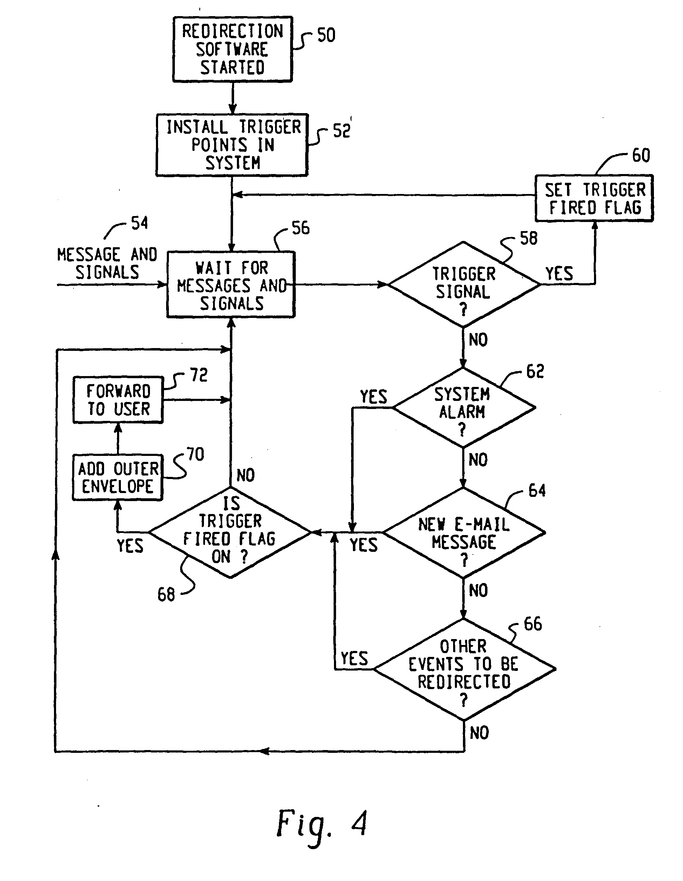

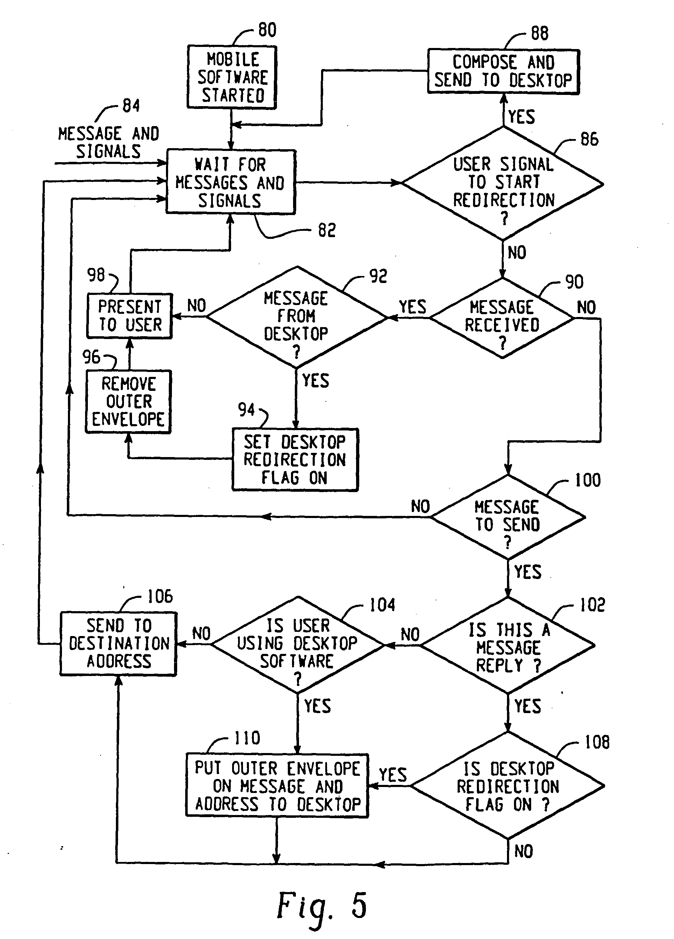

The preferred mobile data communication device 24 is a hand-held two-way wireless paging computer, a wirelessly enabled palm-top computer, a mobile telephone with data messaging capabilities, or a wirelessly enabled laptop computer, but could, alternatively be other types of mobile data communication devices capable of sending and receiving messages via a network connection 22. Although it is preferable for the system to operate in a two-way communications mode, certain aspects of the invention could be beneficially used in a "one and one-half" or acknowledgment paging environment, or even with a one-way paging system. The mobile data communication device 24 includes software program instructions that work in conjunction with the redirector program 12 to enable the seamless, transparent redirection of user-selected data items. FIG. 4 describes the basic method steps of the redirector program 12, and FIG. 5 describes the steps of the corresponding program operating at the mobile device 24.

In an alternative configuration, not explicitly shown in the drawings, the mobile device 24 also includes a redirector program. In this configuration, user selected data items can be replicated from the host to the mobile device and vice versa. The configuration and operation of the mobile device 24 having a redirector program is similar to that described herein with respect to FIGs. 1-4.

A user can configure the redirector program 12 to push certain user-selected data items to the user's mobile data communication device 24 when the redirector 12 detects that a particular user-defined event trigger (or trigger point) has taken place. User-selected data items preferably include E-mail messages, calendar events, meeting notifications, address entries, journal entries, personal alerts, alarms, warnings, stock quotes, news bulletins, etc. Alternatively, the user-selected data items could include any other type of message that is transmitted to the host system 10A, or that the host system 10A acquires through the use of intelligent agents, such as data that is received after the host system 10A initiates a search of a database, a Web site or a bulletin board. In some instances, only a portion of the data item is transmitted to the mobile device 24 in order to minimize the amount of data transmitted via the wireless network 22. In these instances, the mobile device 24 can optionally send a command message (C) to the host system 10A to retrieve more or all of the data item if the user desires to receive it.

The user-defined event triggers include external events, internal events and networked events. External events preferably include: (1) receiving a command message (such as message C) from the user's mobile data communication device to begin redirection, or to execute some other command at the host, such as a command to enable the "preferred list mode" (described below), or to add or subtract a particular sender from the preferred list of the preferred list mode; (2) receiving a similar message from some external computer; and (3) sensing that the user is no longer in the vicinity of the host system; although, alternatively, an external event can be any other detectable occurrence that is external to the host system 10.

Internal events may include a calendar alarm, screen saver activation, keyboard timeout, programmable timer, or any other user-defined event that is internal to the host system 10. Networked events are user-defined messages that are transmitted to the host system from another computer coupled to the host system 10A via a network to initiate redirection. These are just some of the event triggers that could be used with the present invention to initiate replication of the user-selected data items from the host system 10A to the mobile device 24. Other types of triggers are also within the scope of the present invention.

FIG. 1 shows an E-mail message A being communicated over LAN 14 from computer 26 to the user's desktop system 10A (also shown in FIG. 1 is an external message C, which could be an E-mail message from an Internet user, or could be a command message from the user's mobile device 24). Once the message A (or C) reaches the primary message store of the host system 10A, it can be detected and acted upon by the redirection software 12. The redirection software 12 can use many methods of detecting new messages. The preferred method of detecting new messages is using Microsoft's ® Messaging API ("MAPI"), in which programs, such as the redirector program 12, register for notifications or 'advise syncs' when changes to a mailbox take place. Other methods of detecting new messages could also be used.

Assuming that the redirector program 12 is activated, and has been configured by the user (either through the sensing of an internal, external, or networked event) to replicate certain user data items (including messages of type A or C) to the mobile device 24, when the message A is received at the host system 10A, the redirector program 12 detects its presence and prepares the message for redirection to the mobile device 24. In preparing the message for redirection, the redirector program 12 may compress the original message A, it may just compress the message header, or it may encrypt the entire message A to create a secure link to the mobile device 24.

The address of the user's mobile data communication device 24, the type of device, and whether the device 24 can accept certain types of attachments, such as word processing or voice attachments, are also programmed into the redirector 12. If the user's type of mobile device cannot accept a particular type of attachments, then the redirector 12 can be programmed to route those attachments to a fax or voice number where the user is located using an attached fax or voice machine 30.

The redirector 12 may also be programmed with a "preferred list mode" operation that is configured by the user either at the host system 10A, or remotely from the user's mobile data communication device 24 by transmitting a command message C. The "preferred list" in the "preferred list mode" contains a list of senders (other users) whose messages are to be redirected, or it may contain a list of message characteristics that determine whether a message is to be redirected, or it may contain both a list of senders and a list of message characteristics. For example, a message characteristic may relate to the size of the message, or the type of message, or whether the message has any attachments, or whether the message is originating from a particular domain. If activated, the preferred list mode causes the redirector program 12 to operate like a filter, only redirecting certain user data items based on whether the data item was sent from a sender on the preferred list or has certain message characteristics that if present will trigger or suppress redirection of the message.

In the example of FIG. 1, if desktop system 26 was operated by a user on the preferred list of host system 10A, and the preferred list option was activated, then message A would be redirected. If, however, desktop 26 was operated by a user not on the host system's preferred list, then message A would not be redirected, even if the user of the host system had configured the redirector to push messages of type A. The user of the host system 10A can configure the preferred list directly from the desktop system 10A, or, alternatively, the user can send a command message (such as C) from the mobile device 24 to the desktop system 10A to activate the preferred list mode, or to add or delete certain senders or message characteristics from the previously configured preferred list. In this manner, the user can remotely control the operation of the preferred list mode filter so as to dynamically alter the filtering characteristics of the redirector program 12.

After the redirector 12 has determined that a particular message should be redirected, and it has prepared that message for redirection, the software 12 then sends the message A to a secondary memory store located in the mobile device 24. In doing so, the redirector preferably repackages message A as an E-mail with an outer envelope B that contains the addressing information of the mobile device 24, although alternative repackaging techniques and protocols could be used, such as a TCP/IP repackaging and delivery method (most commonly used in the alternative server configuration shown in FIG. 2). The wireless gateway 20 requires this outer envelope information B in order to know where to send the redirected message A. Once the message (A in B) is received by the mobile device 24, the outer envelope B is removed, and the original message A is placed in the secondary memory store within the mobile device 24. By repackaging and removing the outer envelope in this manner, the present invention causes the mobile computer 24 to appear to be at the same physical location as the host system 10, thus creating a transparent system.

In the case where message C is representative of an external message from a computer on the Internet 18 to the host system 10A, and the host 10A has been configured to redirect messages of type C, then in a similar manner to message A, message C would be repackaged with an outer envelope B and transmitted to the user's mobile device 24. In the case where message C is representative of a command message from the user's mobile device 24 to the host system 10A, the command message C is not redirected, but is acted upon by the host system 10A.

If the redirected user data item is an E-mail message, as described above, the user at the mobile device 24 sees the original subject, sender's address, destination address, carbon copy and blind carbon copy information. When the user replies to this message, or when the user authors a new message, the software operating at the mobile device 24 adds a similar outer envelope to the reply message (or the new message) to cause the message to be routed first to the user's host system 10A, which then removes the outer envelope and redirects the message to the final destination, such as back to computer 26. This results in the outgoing redirected message from the user's host system 10A being sent using the E-mail address of the host mailbox, rather than the address of the mobile device, so that it appears to the recipient of the message that the message originated from the user's desktop system 10A rather than the mobile data communication device 24. Any replies to the redirected message will then be sent to the desktop system 10A, which if it is still in redirector mode, will repackage the reply and re-send it to the user's mobile data device 24, as described above.

FIG. 2 is an alternative system diagram showing the redirection of user data items from a network server host system 10B to the user's mobile data communication device 24, where the redirector software 12 is operating at the server 10B. This configuration is particularly advantageous for use with message servers such as Microsoft's® Exchange Server, which is normally operated so that all user messages are kept in one central location (or mailbox store) on the server instead of in a memory store within each user's desktop PC. This configuration has the additional advantage of allowing a single system administrator to configure and keep track of all users having messages redirected. If the system includes encryption keys, these too can be kept at one place for management and update purposes.

In this alternative configuration, server 10B preferably maintains a user profile for each user's desktop system 26, 28, including information such as whether a particular user can have data items redirected, which types of message and information to redirect, what events will trigger redirection, the address of the users' mobile data communication device 24, the type of mobile device, and the user's preferred list, if any. The event triggers are preferably detected at the user's desktop system 26, 28 and can be any of the internal, external or networked events listed above. The desktop systems 26, 28 preferably detect these events and then transmit a message to the server host computer 10B via LAN 14 to initiate redirection. Although the user data items are preferably stored at the server host computer 10B in this embodiment, they could, alternatively, be stored at each user's desktop system 26, 28, which would then transmit them to the server computer 10B after an event has triggered redirection.

As shown in FIG. 2, desktop system 26 generates a message A that is transmitted to and stored at the host system 10B, which is the network server operating the redirector program 12. The message A is for desktop system 28, but user messages are stored at the network server 10B. When an event occurs at desktop system 28, an event trigger is generated and transmitted to the network server 10B, which then determines who the trigger is from, whether that desktop 28 has redirection capabilities, and if so, the server 10B (operating the redirector program 12) uses the stored configuration information to redirect message A to the mobile computer 24 associated with the user of desktop system 28.

As described above with reference to FIG. 1, message C could be either a command message from a user's mobile data communication device 24, or it could be a message from an external computer, such as a computer connected to the Internet 18. If the message C is from an Internet computer to the user's desktop system 28, and the user has redirection capabilities, then the server 10B detects the message C, repackages it using electronic envelope B, and redirects the repackaged message (C in B) to the user's mobile device 24. If the message C is a command message from the user's mobile device 24, then the server host computer 10B simply acts upon the command message using the redirector program 12.

Turning now to FIG. 3, a block diagram is set forth that demonstrates the interaction of the redirector software 12 with additional components of the desktop host system 10A shown in FIG. 1 (*i.e*., the desktop PC) to enable more fully the pushing of information from the host system 10A to the user's mobile data communication device 24. These additional components are illustrative of the type of event-generating systems that can be configured and used with the redirector software 12, and of the type of repackaging systems that can be used to interface with the mobile communication device 24 to make it appear transparent to the user.

The desktop host system 10A is connected to LAN 14, and can send and receive data, messages, signals, event triggers, etc., to and from other systems connected to the LAN 14. Through the LAN, the system 10A can also communicate with external networks 18, 22, such as the Internet or a wireless data network. In addition to the standard hardware, operating system, and application programs associated with a typical microcomputer or workstation, the desktop system 10A includes the redirector program 12, a TCP/IP sub-system 42, an E-mail sub-system 44, a primary data storage device 40, a screen saver sub-system 48, and a keyboard sub-system 46. The TCP/IP and E-mail subsystems 42, 44 are examples of repackaging systems that can be used to achieve the transparency of the present invention, and the screen saver and keyboard subsystems 46, 48 are examples of event generating systems that can be configured to generate event messages or signals that trigger redirection of the user selected data items.

The method steps carried out by the redirector program 12 are described in more detail in FIG. 4. The basic functions of this program are: (1) to configure and setup the user-defined event trigger points that will start redirection; (2) to configure the types of user data items for redirection and optionally configure a preferred list of senders whose messages are to be redirected; (3) to configure the type and capabilities of the user's mobile data communication device; (4) to receive messages and signals from the repackaging systems and the event generating systems; and (5) to command and control the redirection of the user-selected data items to the mobile data communication 24 device via the repackaging systems. Other functions not specifically enumerated could also be integrated into this program.

The E-Mail sub-system 44 is the preferred link to repackaging the user-selected data items for transmission to the mobile data communication device 24, and preferably uses industry standard mail protocols, such as SMTP, POP, IMAP, MIME and RFC-822, to name but a few. The E-Mail sub-system 44 can receive messages A from external computers on the LAN 14, or can receive messages C from some external network such as the Internet 18 or a wireless data communication network 22, and stores these messages in the primary data store 40. Assuming that the redirector 12 has been triggered to redirect messages of this type, the redirector detects the presence of any new messages and instructs the E-Mail system 44 to repackage the message by placing an outer wrapper B about the original message A (or C), and by providing the addressing information of the mobile data communication device 24 on the outer wrapper B. As noted above, this outer wrapper B is removed by the mobile device 24, and the original message A (or C) is then recovered, thus making the mobile device 24 appear to be the desktop system 10A.

In addition, the E-Mail sub-system 44 receives messages back from the mobile device 24 having an outer wrapper with the addressing information of the desktop system 10A, and strips this information away so that the message can be routed to the proper sender of the original message A (or C). The E-Mail sub-system also receives command messages C from the mobile device 24 that are directed to the desktop system 10A to trigger redirection or to carry out some other function. The functionality of the E-Mail sub-system 44 is controlled by the redirector program 12.

The TCP/IP sub-system 42 is an alternative repackaging system. It includes all of the functionality of the E-Mail sub-system 44, but instead of repackaging the user-selected data items as standard E-mail messages, this system 42 repackages the data items using special-purpose TCP/IP packaging techniques. This type of special-purpose sub-system is useful in situations where security and improved speed are important to the user. The provision of a special-purpose wrapper that can only be removed by special software on the mobile device 24 provides added security, and by bypassing E-mail store and forward systems, the speed of delivery of messages can be improved.

As described previously, the redirection can be triggered to begin redirection upon detecting numerous external, internal and networked events, or trigger points. Examples of external events include: receiving a command message from the user's mobile data communication device 24 to begin redirection; receiving a similar message from some external computer; sensing that the user is no longer in the vicinity of the host system; or any other event that is external to the host system. Internal events could be a calendar alarm, screen saver activation, keyboard timeout, programmable timer, or any other user-defined event that is internal to the host system. Networked events are user-defined messages that are transmitted to the host system from another computer that is connected to the host system via a network to initiate redirection. Sensing that the user is not in the vicinity of the host system may be achieved by (1) an electronic camera subsystem that detects whether the user has left a predetermined area; (2) heat sensors that detects the lack of the user's heat presence; (3) motion detector that monitors if the user has not created any motion for a predetermined period of time; (4) disconnection or detachment of the mobile device from a serial cradle connected to the desktop computer or host system (prior to the mobile device user departing, user would remove the device from a serial cradle that permits a serial synchronization of the data on the mobile with that in the host system); and, (5) short-range RF detachment to the mobile device worn by the user as he departs the vicinity of the host system.

The screen saver and keyboard sub-systems 46, 48 are examples of systems that are capable of generating internal events. Functionally, the redirector program 12 provides the user with the ability to configure the screen saver and keyboard systems so that under certain conditions an event trigger will be generated that can be detected by the redirector 12 to start the redirection process. For example, the screen saver system can be configured so that when the screen saver is activated after, for example, 10 minutes of inactivity on the desktop system, an event trigger is transmitted to the redirector 12, which starts redirecting the previously selected user data items. In a similar manner, the keyboard sub-system can be configured to generate event triggers when no key has been depressed for a particular period of time, thus indicating that redirection should commence. These are just two examples of the numerous application programs and hardware systems internal to the host system 10A that can be used to generate internal event triggers.

FIGs. 4 and 5, set forth, respectively, flow charts showing the steps carried out by the redirector software 12 operating at the desktop host system 10A, and the steps carried out by the mobile data communication device 24 in order to interface with the host system. Turning first to FIG. 4, at step 50, the redirector program 12 is started and initially configured. The initial configuration of the redirector 12 includes: (1) defining the event triggers that the user has determined will trigger redirection; (2) selecting the user data items for redirection; (3) selecting the repackaging sub-system, either standard E-Mail, or special-purpose technique; (4) selecting the type of data communication device, indicating whether and what type of attachments the device is capable of receiving and processing, and inputting the address of the mobile device 24; and (5) configuring the preferred list of user selected senders whose messages are to be redirected.

FIG. 4 sets forth the basic steps of the redirector program 12 assuming it is operating at a desktop host system 10A, such as shown in FIG. 1. If the redirector 12 is operating at a network server host system 10B, as shown in FIG. 2, then additional configuration steps may be necessary to enable redirection for a particular desktop system 26, 28 connected to the server 10B, including: (1) setting up a profile for the desktop system 26, 28 indicating its address, events that will trigger redirection, and the data items that are to be redirected upon detecting an event; (2) maintaining a storage area at the server 10B for the data items; and (3) storing the type of data communication device 24 to which the desktop system's data items are to be redirected, whether and what type of attachments the device 24 is capable of receiving and processing, and the address of the mobile device 24.

Once the redirector program is configured 50, the trigger points (or event triggers) are enabled at step 52. The program 12 then waits 56 for messages and signals 54 to begin the redirection process. A message could be an E-Mail message or some other user data item that may have been selected for redirection, and a signal could be a trigger signal, or could be some other type of signal that has not been configured as an event trigger. When a message or signal is detected, the program determines 58 whether it is one of the trigger events that has been configured by the user to signal redirection. If so, then at step 60 a trigger flag is set, indicating that subsequently received user data items (in the form of messages) that have been selected for redirection should be pushed to the user's mobile data communication device 24.

If the message or signal 54 is not a trigger event, the program then determines at steps 62, 68 and 66 whether the message is, respectively, a system alarm 62, an E-Mail message 64, or some other type of information that has been selected for redirection. If the message or signal is none of these three items, then control returns to step 56, where the redirector waits for additional messages 54 to act upon. If, however the message is one of these three types of information, then the program 12 determines, at step 68, whether the trigger flag has been set, indicating that the user wants these items redirected to the mobile device 24. If the trigger flag is set, then at step 70, the redirector 12 causes the repackaging system (E-Mail or TCP/IP) to add the outer envelope to the user data item, and at step 72 the repackaged data item is then redirected to the user's mobile data communication device 24 via LAN 14, WAN 18, wireless gateway 20 and wireless network 22. Control then returns to step 56 where the program waits for additional messages and signals to act upon.

Although not shown explicitly in FIG. 4, after step 68 the program could, if operating in the preferred list mode, determine whether the sender of a particular data item is on the preferred list, and if not, then the program would skip over steps 70 and 72 and proceed directly back to step 56. If the sender is on the preferred list, then control returns to steps 70 and 72 for repackaging and transmission of the message from the preferred list sender to the mobile device 24.

FIG. 5 sets forth the method steps carried out by the user's mobile data communication device 24 in order to interface to the redirector program 12 of the present invention. At step 80, the mobile software is started and the mobile device 24 is configured to operate with the system, including, for example, storing the address of the user's desktop system 10A.

At step 82, the mobile device waits for messages and signals 84 to be generated or received. Assuming that the redirector software 12 operating at the user's desktop system 10A is configured to redirect upon receiving a message from the user's mobile device 24, then at step 86 the user can decide to generate a command message that will start redirection at the host system 10A. If the user does so, then at step 88 the redirection message is composed and sent to the desktop system 10A via the wireless network 22, through the wireless gateway 20, via the Internet 18 to the LAN 14, and is finally routed to the desktop machine 10A.

In this situation where the mobile device 24 is sending a message directly to the desktop system 10A, no outer wrapper is added to the message (such as message C in FIGs. 1 and 2). In addition to the redirection signal, the mobile device 24 could transmit any number of other commands to control the operation of the host system 10A, and in particular the redirector program 12. For example, the mobile 24 could transmit a command to put the host system 10A into the preferred list mode state, and then could transmit additional commands to add or subtract certain senders or certain message characteristics from the preferred list. In this manner, the mobile device 24 can dynamically limit the amount of information being redirected to it by altering the preferred list.

Other example commands include: (1) a message to change the configuration of the host system 10A to enable the mobile device 24 to receive and process certain attachments; and (2) a message to instruct the host system 10A to redirect an entire data item to the mobile device 24 in the situation where only a portion of a particular data item has been previously redirected.

Turning back to FIG. 5, if the user signal or message is not a direct message to the desktop system 10A to begin redirection (or some other command), then control is passed to step 90, which determines if a message has been received. If a message is received by the mobile, and it is a message from the user's desktop 10A, as determined at step 92, then at step 94 a desktop redirection flag is set "on" for this message, and control passes to step 96 where the outer envelope is removed. Following step 96, or in the situation where the message is not from the user's desktop 10A, as determined at step 92, control passes to step 98, which displays the message for the user on the mobile device's display. The mobile unit 24 then returns to step 82 and waits for additional messages or signals.

If the mobile device 24 determines that a message has not been received at step 90, then control passes to step 100, where the mobile 24 determines whether there is a message to send. If not, then the mobile unit returns to step 82 and waits for additional messages or signals. If there is at least one message to send, then at step 102 the mobile 24 determines whether it is a reply message to a message that was received by the mobile unit. If the message to send is a reply message, then at step 108, the mobile 24 determines whether the desktop redirection flag is on for this message. If the redirection flag is not on, then at step 106 the reply message is simply transmitted from the mobile device 24 to the destination address via the wireless network 22. If, however, the redirection flag is on, then at step 110 the reply message is repackaged with the outer envelope having the addressing information of the user's desktop system 10A, and the repackaged message is then transmitted to the desktop system 10A at step 106. As described above, the redirector program 12 executing at the desktop system then strips the outer envelope and routes the reply message to the appropriate destination address using the address of the desktop system 10A as the "from" field, so that to the recipient of the redirected message, it appears as though it originated from the user's desktop system rather than the mobile data communication device.

If, at step 102, the mobile 24 determines that the message is not a reply message, but an original message, then control passes to step 104, where the mobile 24 determines if the user is using the redirector software 12 at the desktop system 10A, by checking the mobile unit's configuration. If the user is not using the redirector software 12, then the message is simply transmitted to the destination address at step 106. If, however, the mobile determines that the user is using the redirector software 12 at the desktop system 10A, then control passes to step 110, where the outer envelope is added to the message. The repackaged original message is then transmitted to the desktop system 10A at step 106, which, as described previously, strips the outer envelope and routes the message to the correct destination. Following transmission of the message at step 106, control of the mobile 24 returns to step 82 and waits for additional messages or signals.

Now with reference to FIGs. 6-8, there will be described an alternative two-host Internet-based system using many of the features of the system described in the network-based host system 10B configuration shown in FIG. 2. In the system shown in FIGs. 6-8, however, instead of a single host system 10B for storing the user's messages and for operating the redirector program 12, there are two hosts, a messaging host 230, where the user's data items are stored, and a wireless redirector host system 240, where a wireless redirector program 242 operates. These two host system are preferably coupled together via the Internet 218. The wireless redirector program 242 is similar in many respects to the redirector program 12 described above, but is configured for communicating with a wireless gateway 260 coupled to a wireless data network 222.

With reference to FIG. 6, there is shown an example system diagram showing the redirection of user data items, such as message A, from user A's desktop PC 204 to user B's mobile data communication device 220, or alternatively, message B from user B's mobile communication device 220 to user A. In this example, the messaging host system 230 maintains and stores data items received from the Internet 218 for user B in a message inbox. In this particular system example, the messaging host system 230 is preferably an ISP or an ASP that provides connectivity to the Internet 218 for a plurality of users, including user B. In another configuration, the messaging host 230 may be a web-based E-mail hosting service such as MSN Hotmail^{™} or a variety of other known web-based E-mail hosting systems. In another configuration, the E-mail hosting service supplies a strictly wireless solution.

The messaging host system 230 is configured so as to forward a copy of all incoming data items destined for user B's inbox to a second host referred to herein as a wireless redirector host system 240. The wireless redirector host system 240 includes the wireless redirector program 242. Advantageously, data items destined for a user of the messaging host system 230 having a mobile communication device are continuously "pushed" to the wireless redirector host system 240 as they arrive at the messaging host system 230. Upon arrival at the redirector host system 240, a wireless redirector software program 242 operating at the system 240 determines whether such data items are user-selected data items to be pushed via a wireless network 222 to the user's mobile communications device 220. In this manner, user-selected data items are advantageously pushed out to the mobile communication device 220 contemporaneously as they arrive to the messaging host system 230 so that the user need not be concerned about delays in receiving user-selected data items on the user's mobile communication device 220.

The wireless redirector host system 240 acts primarily as a bridge for data items received from the Internet 218 and those specific data items that have been user pre-selected to be redirected (via filtering rules to be described later) to the user's mobile communications device via the wireless network 222. These filtering rules are similar to the "preferred list mode" operation described above with respect to the systems shown in FIGs. 1 and 2. The wireless redirector host system 240 may thus be considered a "virtual" service provider, providing redirection service for an external service such as E-mail services hosted by messaging host system 230.

Message A in FIG. 6 represents a data item, such as an E-mail message, sent from user A's desktop PC 204 having user B as the recipient. Because user B has a mailbox on the messaging host system 230, the message A will be directed via the Internet to the host system 230. The flow of this message A is shown in a single solid line 206.

Message B in FIG. 6 represents an external message created on and sent from user B's mobile data communications device 220 having user A as a recipient. Alternatively, message B also may represent a command message from user B's mobile data communication device 220 to the wireless redirector host system 240. The flow of this message B is shown in a single dashed line 258.

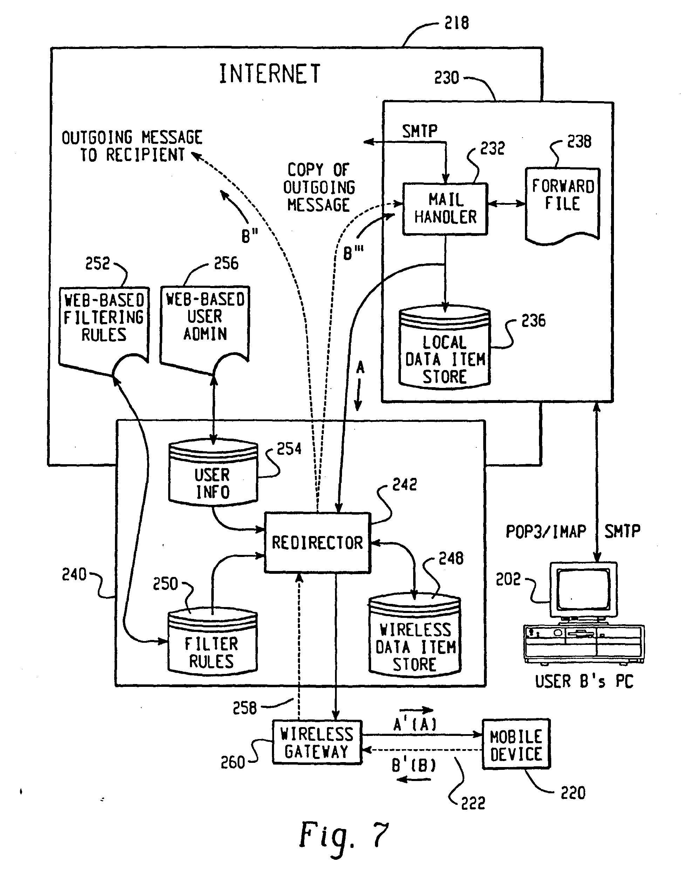

As shown in more detail in FIG. 7, the wireless redirector host system 240 preferably includes, along with the typical hardware and software associated with an Internet gateway, the wireless redirector software 242 which includes a mail handler, preferably a sendmail daemon (not shown), a local delivery agent (not shown), a plurality of wireless mail stores 248 (preferably one for each mobile user such as user B), a filter database 250, and a mobile user profile database 254.

Also as described in more detail in FIG. 7, the messaging host system 230 is preferably a Unix system that includes a sendmail daemon 232, a ".forward" file 238, and a memory storage area 236 for storing the data items of certain users that are having messages redirected to their mobile data communication devices 220.

Referring now to FIGs. 6 and 7, the two-host system invention will first be described by way of example with reference to message A. FIG. 6 shows an E-mail message A being communicated over the Internet 218 from user A's desktop PC 204 destined for user B's inbox, which is located on the messaging host system 230. Once the message A reaches a mail handler 232 at the messaging host 230, such as a sendmail daemon 232 in a preferred embodiment, it can be detected and acted upon by this system 230.

One of the objectives is to be as non-obtrusive as possible to the messaging host system 230 so as to make the invention simple to install and implement for ISPs and ASPs. The messaging host system 230 may be configured in many ways to detect such messages. Since not all users of an ISP or ASP will have a mobile communication device 220, it is preferable that the system 230 includes a unique user file that is accessed and modified upon the arrival of any new message. The preferred method of detecting new messages, such as message A, is using Unix's ".forward" file 238. Preferably, the redirection (or forwarding) of data items is accomplished by modifying the ".forward" file 238 typically found in the user's root directory at the messaging host system 230, such as an ISP. The ".forward" file is a simple ASCII text file comprising at least a list of one or more E-mail addresses (with some control information). The sendmail daemon 232 checks for the existence of this file 238, and uses its content to forward data items to the appropriate locations. Other methods of detecting and forwarding new data items destined for a user having a mobile communications device 220 could also be used and such other methods are well within the scope of the present invention.

An example of the content of the ".forward" file modified for the present invention is:
\usemame@isp.net username@wirelessredirectorhost.net

In this example, the sendmail daemon 232 would redirect a copy of any incoming data items to those two addresses, namely "username@isp.net" and "username@wirelessredirectorhost.net." In the latter case, the data item would, preferably, be sent via the Internet to the wireless redirector host system 240 for further handling by the wireless redirector software program 242. The former address requires the sendmail daemon 232 to send the data item to user B's inbox of the local data item store 236. User B may access his data items in the inbox as he traditionally does - by, for example, POP3 or IMAP. In this manner, the forwarding activity is transparent to the user. The user B when viewing the inbox data items at his desktop PC 202 would know of the redirecting activity only by the message text that may be added to the messages as they are redirected by the mail handler.

Assuming that the redirector program 242 is activated at the wireless redirector host system 240, and has been configured by the user to replicate certain user data items (such as message A) to the mobile communications device 220, when the message A is received at the wireless redirector host system 240, the redirector program 242 detects message A's presence and prepares the message for a second redirection to the mobile device 220. In preparing the message for the second redirection, the redirector program 242 may compress the original message A, it may compress the message header, or it may encrypt the entire message A to create a secure link to the mobile device 220. However, before the redirector program 242 compresses or encrypts the message A and redirects it to the mobile device 220, it examines stored user information and filtering rules that are associated with the recipient, user B, so as to determine how the message A should be handled.

### A) Filtering

Preferably, before the redirector program 242 begins preparing the message A for redirection, the redirector 242 examines the data item with respect to rules contained on a user B configurable filtering agent 250 (see, FIG. 7) which essentially is a database of rules that are to be applied for each user's incoming data items. The filtering agent 250 is preferably accessible by the user via the World Wide Web in a filter web page 252. The filter web page 252 allows the user, if the user so desires, to access and apply a plurality of filtering rules or any combination thereof that are to be applied to all incoming data items destined for that user. Preferably, in addition to filtering rules, web page 252 allows user B to switch between an active or a de-active state for the redirection of user B's incoming messages. This switching feature is particularly useful during instances where user B is at his desktop PC 202 and accessing his inbox of the local store 236 and desires that the redirection of incoming mail to his mobile device 220 is temporarily deactivated. The following criteria are exemplary of the types of filtering rules that may be available to the user: sender(s); how addressed (To, CC, BCC); subject keyword(s); message keyword(s); and importance (high, low, normal).

In any event, the filtering agent 250 is preferably hosted by the wireless redirector host system 240, but may be hosted by alternative host systems, including the messaging host system 230 so long as the redirector program 242 has access to the most current set of rules and can make a determination whether any particular data item has satisfied all user-defined filtering rules. Alternatively, the filtering agent 250 may be combined with the user profile database 254. Data items that do not clear the filtering rules are marked as "handled" by the redirector program 242 in the wireless data item store 248, and are not further handled by the redirector 242.

### B) User Profile

Also accessible by the redirector program 242 is the address of the user's mobile data communication device 220, the user's SMTP address, the type of device 220, and whether the device 220 can accept certain types of attachments, such as word processing or voice attachments. This information is preferably maintained in a user profile database 254 (see, FIG. 7). Such user information may be preferably created, updated and removed via a web-based user administration page 256. Web page 256 is preferably access-restricted to the system administrator of the messaging host system 230 who may from time to time add new users to the redirection service. In addition to the above user information, the system administrator preferably has a switch control feature on the web page 256 to deactivate or activate redirection of the data items from the host system 230 that takes precedence over the user's selection on web page 252. This, advantageously, allows the system administer to maintain control over the value-added service described herein.

If the user's type of mobile device 220 cannot accept certain types of attachments, then the redirector program 242 can be programmed to route the attachments to a fax or voice number where the user is located. The user may provide such information details to the redirector program 242 via a return message.

### C) Redirection

After the redirector program 242 has determined that a particular message should be redirected, and it has prepared the message for redirection, the software 242 preferably converts the message from MIME to CMIME (MIME is a standard Internet mail format, and CMIME is a compressed version of MIME), and then sends the message A to a memory store located in the mobile communications device 220 via the wireless gateway 250 and the wireless data network 222. In doing so, the redirector program 242 preferably packages message A as a message with an outer envelope A' that contains the addressing information of the mobile device 220. In the preferred embodiment, the outer envelope is GME. The wireless gateway 260 requires this outer envelope information A' in order to know where to send the redirected message A. Once the repackaged message (message A in A') is received by the mobile device 220, the outer envelope A' is removed, and the original message A is placed in the second memory store within the mobile device 220. By removing the outer envelope A' and presenting to the user of mobile device 220 message A, the system causes the mobile device 220 to appear to be at the same physical location as the messaging host system 230, or PC 202 in a transparent, seamlessly integrated Internet account hosted by messaging host system 230.

### D) Outgoing Data Item From Mobile

If the redirected user data item is an E-mail message, as described above, then the user at the mobile device 220 sees the original subject line, sender's address, destination address, and carbon copy address. Preferably and desirably, the redirection of the E-mail message A is transparent to the mobile communication device user. When the user, at the mobile device 220, replies to message A, or when the user authors a new message (a reply or a new message collectively referred to as "message B"), the software operating at the mobile device 220 adds a similar outer envelope (message B') to the reply message B (or the new message B) to cause message B to be routed to the wireless redirector host system 240 via the wireless network 222, which then removes the outer envelope B', repackages message B as message B", and redirects message B" to the final destination, such as user A's PC desktop 204.

The general flow of such transmission is shown as a dotted line in FIG. 6. The removal of the outer envelope B' and repackaging of message B into envelope B" results in the outgoing redirected message B" from the wireless redirector host system 240 being sent using the E-mail address of the user's mailbox on messaging host system 230, rather than the address of the mobile device 220, so that it appears to the recipient of the message B" that the message originated from the user's desktop system 202 or from the messaging host system 230 itself (as would be the case of a web-based E-mail hosting system) rather than the mobile data communication device 220. This is accomplished by the redirector modifying the "from" and "reply to" identifiers associated with the message B to now have the SMTP address of user B's messaging host system 230 E-mail account. Advantageously, any replies to the message B" will then be sent to user B's inbox on messaging host system 230, which, if it is still in redirector mode, will repackage the reply and resend it to user B's mobile data device 220, as described above.

A copy of message B (labelled B''') is redirected to user B's inbox at messaging host system 230 for retrieval and access by user B at some later time - for recording keeping purposes. In doing so, the redirector program 242 preferably repackages message B as message B"' so as to now have modified addressing information. In this preferred instance, the modified addressing information would include changing the "from" header information to read something to the following effect: "Sent from mobile communications device to recipient" where 'recipient' would be the recipient's address of message B". This message B"' is forwarded, preferably via the Internet 218, to the messaging host system 230.

As shown in FIG. 7, the messaging host system is preferably configured as an ISP. Here, the ISP system 230 includes a sendmail daemon 232, which forwards the copy B"' to the local data item store 236 by a local delivery agent (not shown). Further, user B may preferably configure his local inbox of data items at the desktop 202 to store such copy messages in a specific inbox for mobile data communications device data items. Of course in the illustrative example of messaging host system 230 configured to redirect all incoming data items to wireless redirector host system 240, sendmail daemon 232 would detect a new message and the ".forward" file 238 would again be accessed and the forwarding information therein acted upon. Consequently, message B"' is redirected (not shown) to redirector host system 240. At the redirector host system 240, the redirector 242 is preferably programmed to detect that such a message B"' is a redirection of message B''' sent therefrom. As such, the redirector 242 ignores this re-redirected message. Alternatively, the mail handler 232 at the messaging host system 230 is configured to detect such messages and to not redirect such messages.

It is to be understood that a plurality of messaging host systems 230 may use a single redirector host system 240 for redirection of users' E-mail messages. Further still, a single redirector program 242 may be used to service the plurality of messaging host systems 230.

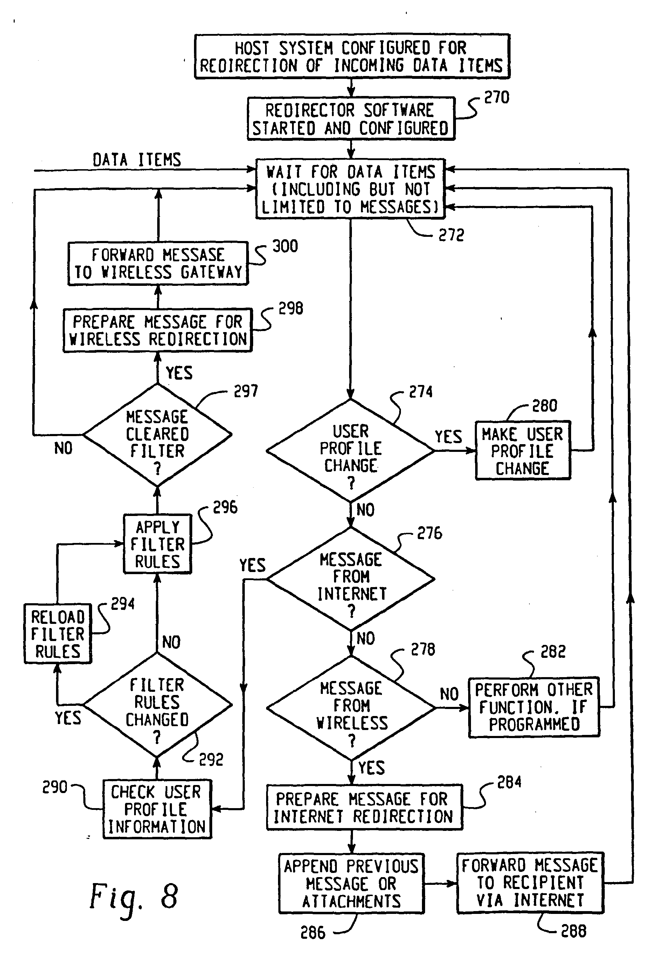

Turning now to FIG. 8, a flow chart is set forth showing the steps carried out by the redirector program 242 operating at the redirector host system 240 shown in FIGs. 6 and 7. The basic steps carried out by the mobile communications device 220 in order to interface with the redirector host system 240 may be accomplished by substantially the same steps as shown in FIG. 5, although modified for this two-host aspect of the invention.

The flow chart in FIG. 8 assumes that the redirector program 242 has been activated and is operating. Additional configuration steps will be necessary to enable redirection services for a new messaging host system 230. These additional configuration steps include: (1) setting up a profile for the new messaging host system 230 indicating its address, etc. (2) setting up individual user profiles, (3) initiating default filtering rules for incoming messages from the messaging host system for the users, and (4) making available both the filtering rule 252 and user profile 256 web pages. The flow chart also assumes the necessary steps have been undertaken to configure the messaging host system 230 to forward a copy of all incoming messages to the redirector host system 240 (*i.e.*, the Unix ".forward" file has been properly configured).

Once the messaging host system 230 is configured 268 and the redirector program 242 is configured 270, the program 242 then waits for data items at step 272. As discussed earlier, data items need not be limited to E-mail messages but may also include signals that are representative of user profile changes or filtering rule changes.

When a data item is detected, the program determines at steps 274, 276 and 278 whether the data item is, respectively, a user profile change 274, a message from the Internet 276, or a message from the wireless mobile device 278. If the data item is a user profile change, then the appropriate user profile change is made at 280. Control then returns to step 272 where the program waits for additional data items. If the data item is a message from the Internet, then the appropriate user profile information is checked and applied at step 290. The program then checks if the filter rules have changed at step 292. If so, the filter rules are reloaded. Next, the filter rules are applied at step 296. If the message does not clear all applicable redirection filter rules at step 297, the preparation and redirection steps 298 and 300, respectively, are skipped. The message is thus ignored and control is returned to the redirector program 242 at step 272. Assuming, however, that the message (or at least a portion thereof) is to be redirected, then the message is prepared for redirection at step 298. In the preparation step 298, the redirector program 242 adds the outer envelope to the message for wireless transmission. At step 300, the repackaged message is then forwarded to the user's mobile device 220 via LAN 258, wireless gateway 260 and wireless network 222. Control then returns to step 272 where the program waits for additional data items to act upon.

If, at step 278, there is a determination that the data item is a message from the mobile device 220, then the message is prepared for Internet redirection at step 284. Preparation would preferably include changing the "from" and "reply to" fields of the message to replicate the address of the user's SMTP address at the messaging host system 230 - the resulting message referred to as message B" in FIG. 6. Also, the preparation step may include making a second copy of the message, such message referred to as message B''' in FIG. 6. In this second copy, the "from" field is changed to, preferably, "Sent from the mobile device to Recipient" where 'Recipient' is the SMTP address of the recipient of message B". At step 286, previous messages or attachments are appended. At step 288, one message is forwarded to the recipient (message B") and the copy of the message (message B"') is forwarded to the user's messaging host system 230 destined for the user's local data item store 236 for record keeping purposes. Control then returns to step 272, where the program waits for additional data items to act upon. If, at step 278, there is a determination that the data item is not a message from the wireless device, other functions may be performed by the redirector program 242 if so programmed to do so. For instance, the message could be a command message such as described earlier in this application where additional text of the E-mail message may be transmitted to the mobile device 220.

Although not explicitly shown in the flowchart, if at step 276 there is a determination that the message is from the Internet, then the redirector program 242 would check whether the message is a re-redirected message from the messaging host system 230. If so, all-subsequent steps are skipped (the message is ignored) and control is returned to step 272. In this manner, re-redirected messages are not redirected to the mobile device 220. Alternatively implemented, this determination could be undertaken at step 296 as part of the default filtering rules. It is to be understood that the user profile and filtering rules could alternatively be combined together, thus eliminating a step(s). This is, of course, well within the scope of the present invention.

Although not shown, the additional step of maintaining the wireless data item store 248 is another step(s) that the redirector would preferably manage. At a predetermined storage threshold either by date or size, each user's earliest stored data item would be deleted to make room for newer incoming data items.

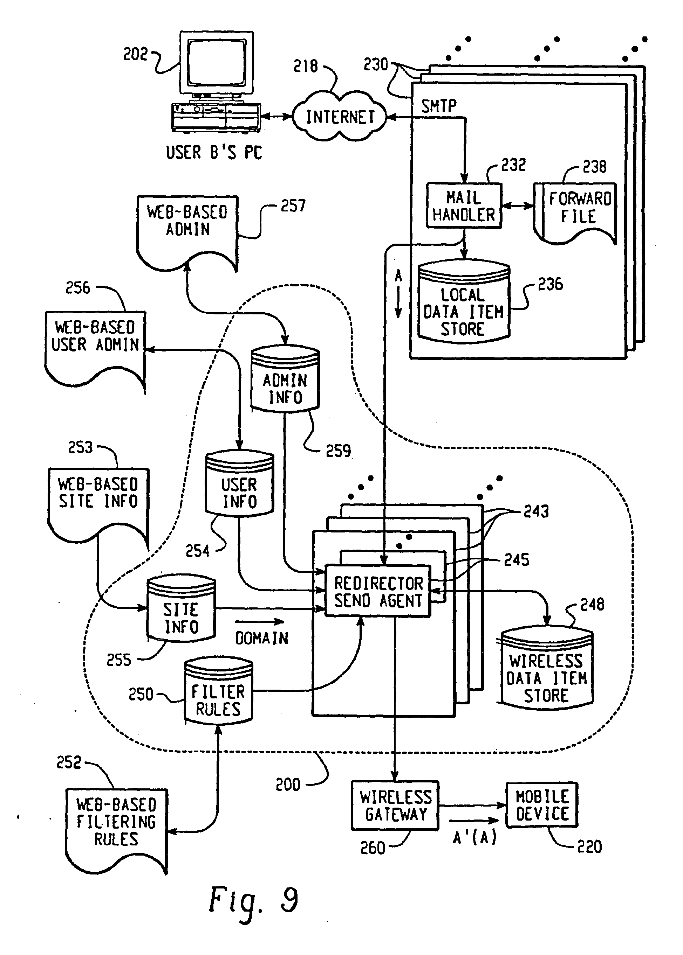

Referring now to FIGs. 9-12, there will be described an alternative multi-host Internet-based system using many of the features of the system described in the two-host Internet-based system configuration shown in FIGs. 6-8. In the redirector system 200 shown in FIGs. 9-12, instead of a two-host system for storing the mobile device user's messages and for operating the redirector program 12, there is a multiplicity of hosts, with each one performing part of the distributed tasks of redirector program 12. The redirector system 200 is capable of handling a multiplicity of messaging hosts 230, where the mobile device user's data items are stored. Each messaging host 230 may correspond to an ISP or an ASP with its own set of users, a subset of which are configured to have their E-mail forwarded for wireless redirection to their respective mobile devices 220 via the mail handler 232 according to the forward file 238, as described above with reference to FIGs. 6-8. However, in the multi-host Internet-based system 200, instead of using a single wireless redirector host system 240, and a single wireless redirector program 242, the redirector program has been embodied into a multiplicity of redirector send agents 245 and redirector receive agents 249, a pair of which can be hosted on separate redirector agent host servers 243. This multi-host configuration provides the significant advantage of allowing the redirector system 200 to be scaleable and easily configured to support multiple ISPs and/or ASPs each having multiple sites, with each site having an associated Internet domain name. A single redirector agent host server can support several pairs of send and receive agents, each pair of agents serving an ISP or ASP site. The mapping of redirector host servers to sites and the configuration of redirector agents is accomplished via the web-based administration 257 of the administration information database 259. Although multiple host arrangements are described hereinafter primarily in the context of an illustrative example of ISPs, it is to be understood that similar arrangements may also be applied to ASPs.

SMTP is the only system interface that a messaging host such as an ISP needs to support in order to interface with redirector system 200 during normal operation. Advantageously, a web browser is the only user interface 253 an ISP needs to support in order to configure the redirector system 200. Similarly, a web browser is the user interface 256 a user needs to support in order to configure the redirector system 200.

By using a hierarchy of stored configuration information in the databases 259, 255, 254 and 250, the web interfaces 257, 256, 253 and 252 allow a plurality of system 200 administrative accounts to manage a plurality of site manager accounts, which in turn manage a plurality of site dependent mobile device user accounts. At each level down, the web-based interfaces provide access to only those elements of the databases for which the account has authority.

Administrative accounts have authority to manage site manager accounts, redirector agent host server configuration records, and set site configuration default values. Site manager accounts have authority to override certain site configuration records, manage user accounts, and set user configuration default values. User accounts have authority to override certain user records. The next three paragraphs illustrate the type of information and authority associated with the three accounts described above.

The access to administrative operations is limited to system 200 operators who have an administrative account comprising an administrator name and password useable on web-based administration page 257 in order to gain access to the administration database 259. An administrator of system 200 manages records for configuring redirector agent host servers, and manages accounts for site managers, which access the site information database 255 via web-based site information page 253.

Site managers represent ISP hosted Internet domains and manage site information records for further configuring redirector agents, and manage accounts for mobile device 220 users who wish to use system 200 for redirecting their data items. The site information record includes such items as, for example, an optional Internet domain name and a default tag line to be appended at the end of every E-mail.

A site mobile user, when provided with an account by a site manager, can access the user information database 254 via web based user administration page 256, in order to update those fields of their user information record for which they have authority. For instance, a user might wish to override the default site wide tag line stored in the site info record corresponding to his site, thereby enabling the tag-line customization feature. The user might also wish to override the default domain name based E-mail address provided by his site manager by specifying his single SMTP address, thereby enabling domain-massaging feature.

As used in this description, the phrase domain-massaging is defined as the feature which allows an ISP or a site manager to customize the "sent from" and "reply to" addresses for messages generated at a mobile device by a mobile device user. This new feature functionality allows an ISP to effectively offer "single E-mail address" functionality to their mobile device users that have an E-mail address, which is different from the ISP's default domain address. For example, a first mobile device user with "single E-mail address" user@userscompany.com, can go through ISP's forwarding service over domain isp.com where the user has traditionally the E-mail address user@isp.com. In one embodiment, the ISP can activate the domain-massaging feature of the redirector receive agent to replace user@isp.com with user@usercompany.com in the "sent from" and "reply to" fields for E-mail messages generated (i.e., originally created, or replied from) at the mobile device user's mobile device, thereby (1) allowing the user to advantageously use only one E-mail address when creating messages at either his mobile device or at his traditional non-wireless E-mail generation means and (2) making it appear as though the user has a "single E-mail address", user@user company.com.

Closely related to the domain-massaging feature is the tag line customization feature, which as used herein, is defined as the feature which allows an ISP to provide a default tag line to be appended to all of its mobile device users' messages generated at and sent from the mobile device, as well as the user's ability to customize the tag line. Preferably, the tag line is appended to the messages after arrival from the wireless network such as at the redirector system, but prior to transmission to the intended recipient. This advantageously permits over-the-air bandwidth transmission savings. For instance, an ISP may wish to have a default tag line which reads, for instance, "This mobile message brought to you by http://www.isp.com/" thereby creating a sales opportunity at every E-mail message sent by every one of their new mobile users. A mobile user can then customize the tag line by, for instance, including a signature such as:
With regards,
User Name
   tel.: xxx.yyy.zzz wwww
   e-mail: user@isp.com

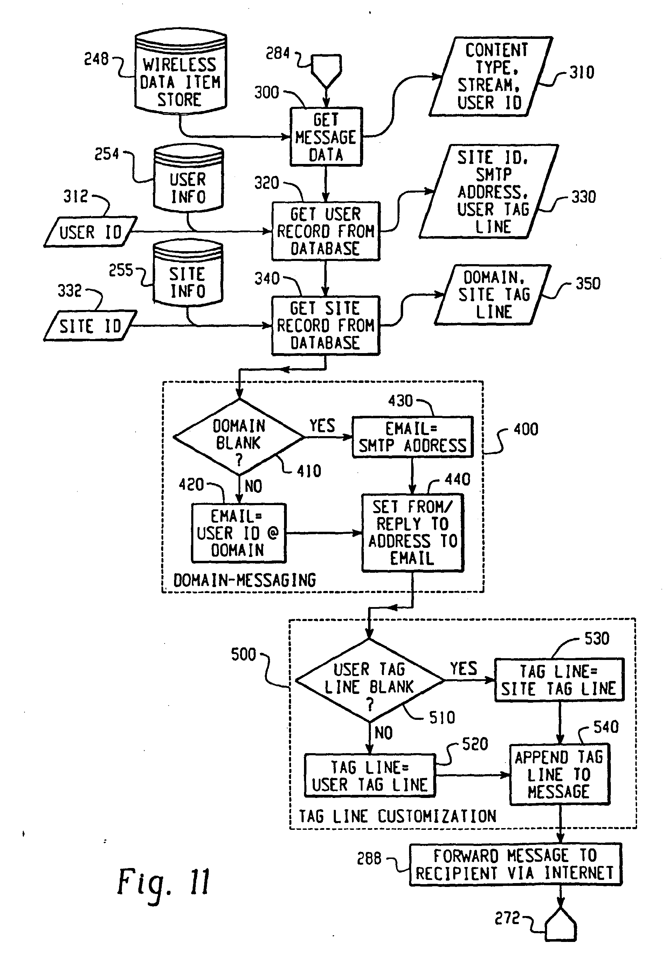

FIG. 11 illustrates the steps taken by a redirector receive agent 249 in order to accomplish the two features described in the previous paragraphs, namely domain-massaging and tag-line customization. In this example, the redirector receive agent can be considered to accomplish steps 284, 286, and 288 of the redirector program 242 illustrated in FIG. 8, as well as the additional domain-massaging and tag line customization features to be described.

At step 300, the redirector receive agent is notified that a wireless message is available for redirection in wireless data item store 248. This step consists of getting the message data 310 comprised of a content type, a stream, and a user id. This example assumes that the message type is an E-mail message originated from the user's mobile device 220. At the next step 320, the user id 312 obtained in step 300 is used as a key to obtain a user record 330 from the user information database 254. At step 340, site id 332 obtained in step 320 is used as a key to obtain site information record 350 from the site information database 255. Step 400, comprised of steps 410, 420, 430 and 440, sets the user's E-mail address upon the condition of the site information record 350 having a blank domain name. If the domain name is blank, then the SMTP address found in the user record 330 is used as the E-mail address. If a domain name is found in site record 350, then a juxtaposition of user name and domain name is utilized as the E-mail address. Step 440 replaces the "send from/ reply to" addresses of the message to the E-mail address. Collectively, step 400 accomplishes the domain-massaging feature. Steps 500, comprised of steps 510, 520, 530 and 540 collectively accomplish the tag-line customization. In step 510, the user tag line found in user record 330 is examined. If the user tag line is blank, then the site tag line found in record 350 is utilized. If the user tag line is not blank, then it is utilized instead of the site tag line. The utilized tag line is appended to the message at step 540. Finally, step 288 proceeds to send the message to the recipient designated in the message via the Internet, as described in reference to FIG. 8.

Although not explicitly shown in the drawings, it is considered a variation of the present invention that is within the scope of the invention to perform other types of automated information substitution in message data items of which two examples have been illustrated in the case of domain-massaging and tag line customization in the redirector receive agent.

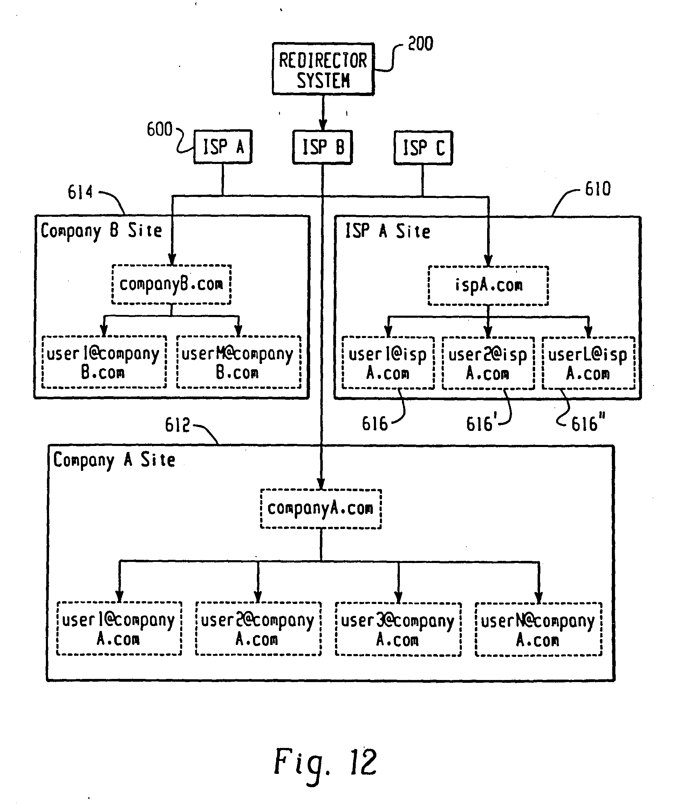

As illustrated in FIG. 12, the system 200 advantageously permits at least one ISP, such as ISP A 600, to provide wireless redirection for its customer base and customized single E-mail address transparency for a plurality of companies, such as Company A and Company B, by managing a distinct site for each company, in this case ISP A site 610, Company A site 612, and Company B site 614, with corresponding site manager accounts on the redirector system 200. Mobile device users associated to each of those sites can configure their E-mail tag lines, and their E-mail addresses obtained by juxtaposing their E-mail name and their custom site's domain name, by taking advantage of domain-massaging and tag line customization respectively, via the web-based user interface 256.

Continuing with the same example, if ISP A having a corresponding messaging host 230 wishes to offer wireless redirection to its base users, the web-based site admin page 257 is used to create a site manager account for the ISP by the system 200 administrator in the administration information database 259 via the user interface 257. The interface 257 is also used to create site manager accounts for other sites managed by the ISP, such as Company A or Company B. The web-based administration page 257 is also used to configure the name and authentication information of the redirector agent host server 243, and associated redirector send and receive agents corresponding to each site. Then the ISP need only: a) provide configuration site information to the site info database 255 via the web based site information page 253, the site information corresponding to ISP site infrastructure such as the IP address of the mail handler 232, associated site domain name, and the creation of individual mobile device user accounts for its mobile device users; and b) add an entry for each of its mobile device users in the forward file 238. After the ISP mobile device user accounts 616, 616', 616" are created for each site, the ISP mobile device users can update their respective user information 254 using the web-based user admin page 256.

To further illustrate this aspect, an example is provided. ISP A provides wireless redirection service of messages traditionally only hosted at and accessed via the ISP to mobile devices assigned to its traditional ISP customer base. Some of the ISP customers have customized domain names (i.e., domain.com) wherein the ISP hosts a web site (i.e., www.domain.com) and a plurality of E-mail addresses associated with the customized domain names (i.e., john@domain.com). Such customers who opt for the wireless redirection of their E-mail messages may continue to use their customized E-mail addresses when generating and receiving E-mail messages at their mobile device. When the systems 200 and 230 are configured for wireless redirection of E-mail directed to domain.com, a method for redirecting messages between a ISP host system and a mobile data communication device is provided, the method comprising the steps of: configuring redirection settings for one or more mobile device users at the host system; receiving incoming messages directed to a first address at the ISP host system from a plurality of message senders; in response to the redirection setting, continuously redirecting the incoming messages from the ISP host system to the mobile data communication device via a redirector host system; receiving outgoing messages generated at the mobile communications device at the redirector host system; configuring address information of the outgoing messages so that the first address is used as an originating address of the outgoing messages; and transmitting the configured outgoing messages to message recipients.

The systems described above with reference to FIGS. 6-12 redirect data items from a messaging host system to a mobile communication device through a wireless redirection host system. Redirected data items are compressed and repackaged in the redirection host system before being forwarded to the wireless gateway for delivery to the mobile device, as shown as the message A in A' in FIG. 6 for example.

In some redirection system implementations, however, it may be desirable to provide a secure link to a mobile device. A redirected data item must then be encrypted using an encryption key at some point within the redirection system and then decrypted at a mobile device using a decryption key corresponding to the encryption key. A common problem encountered in securing such communications relates to providing the required decryption key to the mobile device.

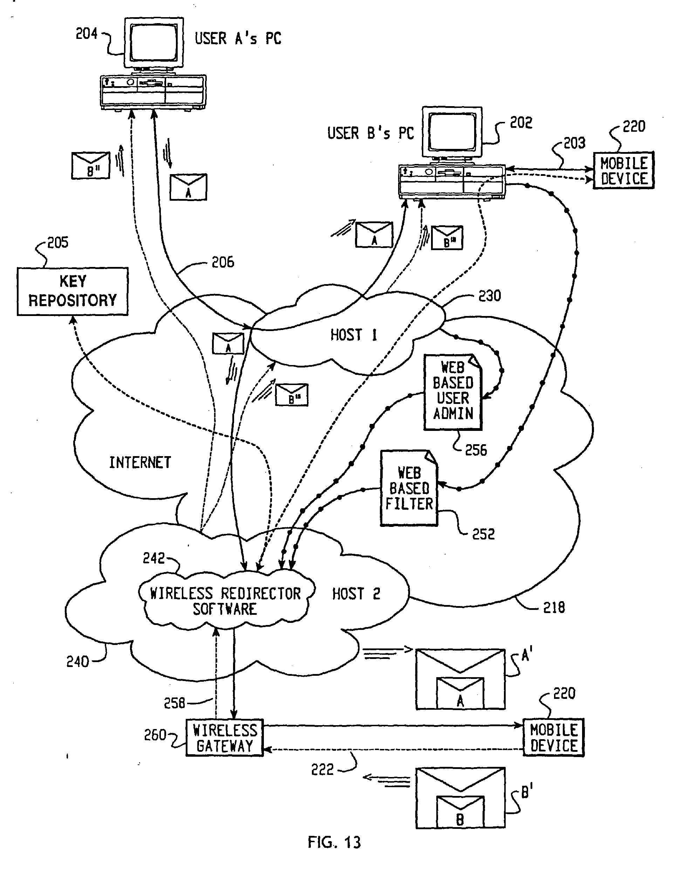

FIG. 13 is a block diagram of a redirection system adapted for securely redirecting data items from a messaging host system to a mobile device over a wireless link. The system of FIG. 13 is substantially similar to the system in FIG. 6, but provides for an encryption key exchange between the redirection host system 240 and the mobile device 220 as described in further detail below.

In FIG. 13, a user is configured for redirection as described above. In order to provide for secure communications over the wireless link, a mobile device 220 is then preferably connected to the user's desktop PC 202 in the above example. This connection may, for example, be a serial connection 203 to a port on the desktop PC 202 through a suitable connector such as a holder or cradle in which the device may be positioned by the user. Since the serial connection would normally be a relatively short link and can generally be monitored directly by the user, this link is a so-called "trusted" link, or connection, over which an encryption key can be loaded onto a device 220. Although the device 220 is shown in two positions in FIG. 13, it should be apparent that both instances may represent the same mobile device 220 in this illustrative example.

According to a symmetric key encryption scheme, the device 220 shares secret information (a key), such as a random number, with the component in the system that encrypts redirected data items and decrypts data items generated at the mobile device 220. The key may be generated at the redirection host system 240 by the redirector 242. The shared key might instead be generated at the user's desktop PC 202, dependent upon the user's movement of the PC's mouse and/or keystrokes entered at the desktop PC for example. Generation of the key at the messaging host system 230, at the wireless gateway 260, or on the mobile device 220 itself is also contemplated.

Regardless of where the key is generated, it must then somehow be provided to both the device 220 and the encryption component within the system. This symmetric key distribution will now be described in terms of an illustrative example. In the following description, it is assumed that the key is generated by the redirector 242 in the redirection host system 240.

When the key has been generated, it is stored at the redirector host system 240 for use in encrypting redirected data items. A secure message containing the key is then sent to the device 220 through the PC 202 and serial connection 203. This secure message transfer may be accomplished using Internet Message Access Protocol (IMAP) over Secure Sockets Layer (SSL) or a secure web page for example. The key is then extracted from the secure message by either the PC 202 or the mobile device 220 and stored in the mobile device 220.

After the key has been stored at both the redirector host system 240 and the mobile device 220, any redirected data items may be compressed and then encrypted by the redirector software 242 before being sent to the mobile device 220 through the wireless gateway 260. The device 220, using the stored key, decrypts and decompresses any received redirected data items to recover the original data item which was redirected from the messaging host system 230.

A public key encryption scheme may also be used to secure redirected items. According to this aspect of the invention, a redirected data item is encrypted using a public key corresponding to a private key stored on the mobile device 220. The public key may be stored for example in a central key repository 205 from which it may be retrieved by the wireless redirector software 242. In a preferred embodiment, key generation and assignment is managed by the wireless redirector software 242. A key pair comprising a public key and a private key is generated and assigned to a particular mobile device 220 by the wireless redirector software 242. The public key is then stored to the central repository 205 and the private key is sent over a secure connection to the device 220 through the PC 202 and serial connection 203, using IMAP over SSL for example. The system then operates substantially as described above to encrypt redirected items before transmission over a wireless network to the mobile device 220. In order to provide for secure transfer of data items from the mobile device 220 to the redirector host system 240, a second key pair for the redirection host system must also be generated or assigned. Once generated and/or assigned, the redirector private key is stored within the redirector host system 240 and the redirector public key is similarly sent to the repository 205 and preferably also to the device 220.

The mobile device key pair may be generated on the device 220 and the redirector key pair is generated by the redirector 242. The generated private keys are respectively stored on the device 220 and the redirector 242 and the public keys are sent to the key repository 205. The device 220 must be able to communicate with the key repository 205, such as through the serial connection 203 and PC 202, or perhaps through the redirector 242. The public keys may be retrieved from the repository 205 according to any public key distribution scheme. These public keys might also be exchanged when a mobile device 220 is first registered with the redirector 242. When all required keys have been generated and exchanged, data items sent between the mobile device 220 and the redirector 242 can then be encrypted.

Encryption and decryption of data items sent from the mobile device 220, such as message B, may be accomplished using the same keys as those used for data items sent to the mobile device from the redirector, such as message A. Different keys may also be used. Regardless of the encryption scheme (symmetric key, public key, same or different keys, etc.), the mobile device 220 must be able to decrypt data items encrypted by the redirector 242 (FIG. 13), 242A and vice versa. In a symmetric key system in which the same keys are used for redirected data items and data items sent from the mobile device 220 for example, both the redirector 242, 242A and mobile device 220 must store an encryption key and a decryption key. Furthermore, the redirector 242, 242A must store such keys for every mobile device 220 for which it provides data item redirection. Other key storage requirements or arrangements will be apparent to those skilled in the art.

The encryption arrangements described above provide for secure data item transfer over the wireless network within which a mobile device 220 operates. An eavesdropper listening on the wireless network is thereby prevented from recovering the content of any redirected data items. However, the wireless network typically represents only a portion of the communication link between a sender and the mobile device. For example, an incoming E-mail message A arriving at the messaging host system 230 may be sent from any PC 204 connected to the Internet. Common mail transfer mechanisms such as SMTP as shown in FIG. 7 are not easily adapted for secure communications, such that messages are normally sent "in the clear" or unencrypted over the Internet. In FIG. 13, the message A may also be transferred to the redirector 242 from the messaging host system 230 using SMTP and would therefore potentially not be secure between the sender and the redirector software 242, where encryption of the message is performed in the above example. Messages composed at a mobile device 220 similarly remain encrypted only between the device 220 and the redirector 242, since the message must be decrypted at the redirector 242 for SMTP transfer to the messaging host system 230 and a recipient such as PC 204. Although message encryption according to the schemes described above secures the message between the redirector 242 and a mobile device 220, it may be desirable to avoid transferring messages destined for or generated at the mobile device 220 in the clear over the Internet to thereby enhance data item transfer security.

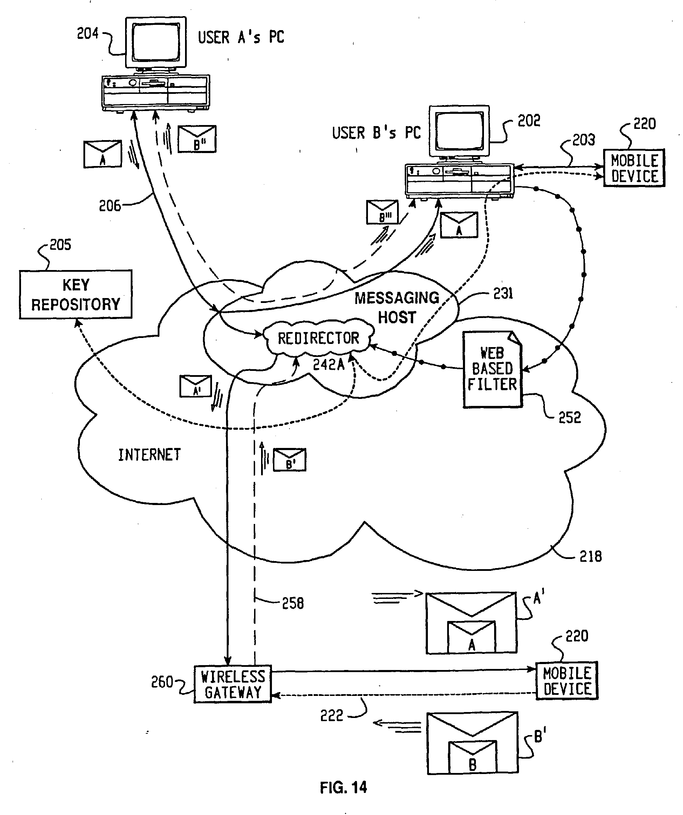

The data item transfer between a messaging host system and a wireless redirection system over the Internet may be avoided by integrating a redirection system with a messaging host system. Such a system is shown in FIG. 14. Since data items need not be transferred between the messaging host and the redirection host in the clear over the Internet, the above security risks are eliminated.

As in FIGS. 6 and 13 above, FIG. 14 is an example system diagram showing the redirection of user data items, such as a message A, from user A's desktop PC 204 to user B's mobile data communication device 220, or alternatively, message B from user B's mobile communication device 220 to user A. As in FIG. 13, both instances of the device 220 in FIG. 14 may represent the same mobile device 220. Although redirection is described primarily in the context of messaging, it is to be understood that the invention is in not limited to messaging. The specific implementations of redirection functionality for other data item types may be somewhat different than messaging-related implementations, but the general redirection principles and methods will be common and are therefore easily adaptable to such other data item types by those skilled in the art.

In FIG. 14, the messaging host system 231 maintains and stores data items received from the Internet 218 for user B in a message inbox, as described above. The messaging host system 231 may be an ISP that provides connectivity to the Internet 218 for a plurality of users, including user B. The messaging host 231 may also comprise a web-based E-mail hosting service such as MSN Hotmail^{™} or a variety of other known web-based E-mail hosting systems. Unlike the messaging host systems described above, however, the messaging host 231 includes a redirector component 242.

The messaging host system 231 incorporates the wireless redirector program 242, which determines whether data items destined for a user of the messaging host system 231 having a mobile communication device are user-selected data items to be pushed via a wireless network 222 to the user's mobile communications device 220. Data items may thereby be continuously "pushed" to the mobile communication device 220 through the wireless gateway 260 as they arrive at the messaging host system 231, providing for "always on, always connected"® functionality of the mobile device 220.

In FIG. 14, as in the preceding Figures, message A represents a data item, such as an E-mail message, sent from user A's desktop PC 204 having user B as the recipient. Because user B has a mailbox on the messaging host system 231, the message A will be directed via a WAN, such as the Internet 218, to the host system 231. Similarly, message B represents a message created on and sent from user B's mobile data communications device 220 having user A as a recipient. Alternatively, message B may instead represent a command message from user B's mobile data communication device 220 to the wireless redirector component 242. The flows of messages A and B are respectively shown as a single solid line 206A and a single dashed line 258B.

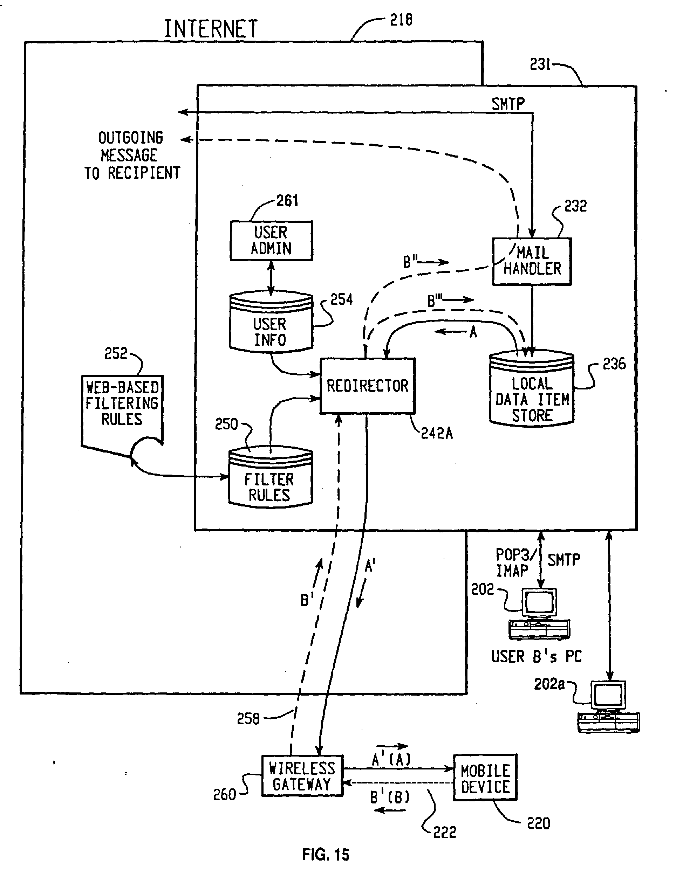

The messaging host 231 is shown in more detail in FIG. 15. As above, the messaging host system 231 is preferably a Unix system that includes a sendmail daemon 232 and a memory storage area 236 for storing the data items of certain users that are having messages redirected to their mobile data communication devices 220. The messaging host 231 also includes the redirector 242A, along with the typical hardware and software associated with an Internet gateway. The redirector 242A is similar to the redirector 242, except that redirector 242A need not include such messaging system components as a mail handler and delivery agents, which will be provided as part of the messaging system 231. A filter database 250 and a mobile user profile database 254 are used by the redirector 242A to determine a user's redirection characteristics, substantially as described above.

Since the redirector 242A is incorporated into the messaging host system 231, data items for redirection may be detected directly by the redirector 242A. The mail handler 232 stores incoming data items such as E-mail messages for example to the local store 236. Since only a single store is used in the integrated messaging and redirection system shown in FIG. 15, the redirector 242A may query, poll, or otherwise access the local store 236 to detect new data items in mailboxes for users with a mobile device. The mail handler 232 might instead be configured to notify the redirector 242A upon the arrival of new data items for redirection to a mobile device. Alternatively, a variant of the ".forward" file functionality described above might also be implemented, such that data items destined for users having a mobile device are forwarded to the redirector 242A. Other procedures for detecting new data items in the local store 236 will be apparent to those skilled in the art and as such are considered to be within the scope of the invention.

Whether or not data items are to be redirected, incoming data items are preferably stored to a user's inbox in the local store 236. If a data item is to be redirected, a copy of the data item is sent to the mobile device, but the data item is not removed from the local message store 236. Such data items may be accessed by a user via the user's normal access method, POP3 or IMAP for example. The forwarding of data items is therefore transparent to the user. In the example of E-mail message A, the user B when viewing the inbox data items at his desktop PC 202 would know of the redirecting activity only from message text that may be added to the messages as they are redirected.

Assuming that the redirector program 242A is activated and has been configured by the user to replicate certain user data items (such as message A) to the mobile communications device 220, when the message A is received at the messaging host system 231, the redirector program 242A detects message A's presence. The user information in the store 254 and the filtering rules in the store 250 that are associated with the recipient, user B, are then used by the redirector 242A to determine how the message A should be handled.

Preferably, before the redirector program 242A begins preparing the message A for redirection, the redirector 242A examines the data item with respect to rules contained on the filtering agent 250 configurable by each mobile device user such as user B. The filtering agent 250 is essentially a database of rules that are to be applied for each user's incoming data items and is preferably accessible by the user via the World Wide Web in a filter web page 252. The filter web page 252 allows the user to access and select a plurality of filtering rules or any combination thereof to be applied to all incoming data items destined for that user. The web page 252 also preferably allows user B to switch between an active or a de-active state for the redirection of user B's incoming messages. This switching feature is particularly useful during instances where user B is at his desktop PC 202 and accessing his inbox of the local store 236 and desires that the redirection of incoming mail to his mobile device 220 be temporarily deactivated. Such deactivation may be automatically initiated when the device 220 is connected to the desktop 202 via serial connection 203 for example. The types of filtering rules that may be available to the user include: sender(s); how addressed (To, CC, BCC); subject keyword(s); message keyword(s); and importance (high, low, normal). Data items that do not clear the filtering rules are marked as "handled" by the redirector program 242A in the data item store 236, and are not further handled by the redirector 242A.

The filter agent 250 is preferably stored at the messaging host system 231, but may instead be stored at any location accessible to the redirector 242A. As described above, the filter agent may be integrated with the user information store 254.

Also accessible by the redirector program 242A is a user profile database 254, which includes the address of the user's mobile data communication device 220, the user's SMTP address, the type of device 220, and whether the device 220 can accept certain types of attachments, such as word processing or voice attachments. The user information may be preferably created, updated and removed via a user administration arrangement 261. Although user administration functions may be provided through Web page 256 as shown in FIG. 13, for example, since the redirector 242A is incorporated into the messaging host system 231, and user administration is normally access-restricted to the system administrator of the messaging host system, redirector user administration is preferably integrated with the administration functions of messaging host system 231. The messaging system administrator preferably has a switch control feature to deactivate or activate redirection of the data items from the host system 231 that takes precedence over the user's selection on web page 252. This, advantageously, allows the system administer to maintain control over the value-added service described herein. The administrator may also set global filtering rules to be applied to data items for all redirector users.

If the user's type of mobile device 220 cannot accept certain types of attachments, then the redirector program 242A can be configured to route the attachments to a fax or voice number where the user is located. The user may provide such information details to the redirector program 242A via a return message.

After the redirector program 242A has determined that a particular message should be redirected, the message is preferably compressed and encrypted. A symmetric key or public key encryption scheme may be used. In a symmetric key scheme, the keys may be generated by the redirector 242A, the desktop 202 or the device 220 and distributed to or from the device via serial connection 203 and a secure transfer mechanism such as IMAP over SSL, as described above. When a public key encryption scheme is used, the public key for the user of the mobile device is stored in a key repository 205 (FIG. 14) and can be accessed by the redirector 242A. Although FIG. 14 shows key generation at the redirector 242A, the user's private key is preferably generated either at the mobile device 220 or at the desktop PC 202, since the private key is then either already on the device 220 or must be transferred only over the connection 203. After a data item such as message A has been compressed and encrypted, the redirector program 242A preferably packages the data item as a message with an outer envelope A' that contains addressing information of the mobile device 220. The wireless gateway 260 requires this outer envelope information A' in order to know where to send the redirected message A. The mobile device 220 removes the outer envelope A' and decrypts the message using the appropriate key and decompresses the decrypted message to recover the original data item, message A.

If the redirected user data item is an E-mail message, as described above, then the user at the mobile device 220 sees the original subject line, sender's address, destination address, and carbon copy address. Preferably and desirably, the redirection of the E-mail message A is transparent to the mobile communication device user. When the user, at the mobile device 220, replies to message A, or when the user composes a new message (a reply or a new message collectively referred to as "message B"), the new message is compressed, encrypted and repackaged in a similar outer envelope (message B') to cause message B to be routed to the redirector 242A via the wireless network 222, wireless gateway 260 and internet or other WAN connection 258. The redirector 242A then removes the outer envelope B', decrypts and decompresses the message B and repackages message B as message B" where necessary to direct message B" to its final destination, such as user A's PC desktop 204.

The general flow of a data item from a mobile device 220 to an addressee is shown as a dotted line in FIGs. 14 and 15. The removal of the outer envelope B' and repackaging of message B into envelope B" results in the outgoing message B" from the messaging host system 231 being sent using the E-mail address of the user's mailbox on messaging host system 231, rather than the address of the mobile device 220. Thus, it appears to the recipient of the message B" that the message originated from the user's desktop system 202 or from the messaging host system 231 itself (as would be the case of a web-based E-mail hosting system) rather than the mobile data communication device 220. This is accomplished by the redirector 242 modifying the "from" and "reply to" identifiers associated with the message B to now have the SMTP address of user B's messaging host system 231 E-mail account. Advantageously, any replies to the message B" will then be sent to user B's inbox on messaging host system 231, which, if it is still in redirector mode, will repackage the reply and resend it to user B's mobile data device 220, as described above.

In the integrated messaging/redirector system 231, a copy of message B is redirected to user B's inbox in the local store 236 for retrieval and access by user B at some later time. In doing so, the redirector program 242A preferably repackages message B as message B"' so as to have modified addressing information. In this preferred instance, the modified addressing information would include changing the "from" header information to indicate that the message was sent from mobile communications device. This message B"' is forwarded, possibly through the mail handler 232, to the local store 236.

As described above, the integrated messaging/redirection host system 231 is preferably configured as an ISP or an ASP. Here, the system 231 includes a sendmail daemon 232, which would forward the copy B"' to the local data item store 236 by a local delivery agent (not shown). A user may preferably configure his local inbox of data items at the desktop 202 to store such copy messages in a specific inbox for mobile data communications device data items. However, in the illustrative example of messaging host system 231 configured to redirect all incoming data items, message B"' is redirected (not shown) to redirector 242A. The redirector is preferably programmed to detect that the message B"' is a redirection of message B"' sent therefrom. As such, the redirector ignores this re-redirected message. Alternatively, the mail handler 232 at the messaging host system 231 may be configured to detect such messages and to not redirect such messages. Since the redirector 242A is integrated with the messaging host system 231, this re-redirection of the copy data items is more easily avoided than in the above two-host systems. For example, in implementations where the redirector 242A directly accesses the local message store to detect new data items, it could be configured to quickly identify and ignore such copy messages.

The operation of the redirector program 242A is substantially as shown in the flow chart of FIG. 8 and described above. Although the communications between the messaging and redirector components within the messaging host system 231 and the specific configurations thereof are somewhat different than in the above two-host system, once a new message for redirection is detected, redirection operations proceed as shown in FIG. 8.

The redirection system shown in FIGs. 14 and 15 provides for secure communications between a mobile device 220 and the messaging host system 231. A significant advantage of such a system is that data item redirection does not compromise any security measures which may be implemented by an ISP or ASP to protect data items stored on a messaging system or server. As stated above, although the following detailed description is based primarily on an illustrative example of ISPs, those skilled in the art will appreciate that similar arrangements may be implemented for ASPs.

In the two-host system described above, data items are sent in the clear between the messaging host system 230 and the wireless redirector host system 240. Even though access to such data items on the messaging host system 230 may be restricted by an ISP through firewall arrangements and logon scripts for example, data items sent from the messaging host system 230 to the redirector host system 240 may be intercepted. With the secure integrated messaging/redirector system 231 shown in FIGs. 14 and 15 however, data items are secure between the ISP system and the mobile device 220. Even if these encrypted data items are intercepted, they are encrypted and therefore cannot be read. Where such a strong encryption algorithm as triple-DES (Data Encryption Standard) is used, decryption of such intercepted data items is computationally infeasible. The protection inherent in the ISP arrangements is therefore not compromised by redirection of data items. In the above example, firewall and logon protection are thereby effectively extended to the mobile device 220. This feature of the integrated messaging/redirection host system 231 may be particularly important for certain groups of users having E-mail accounts on the same ISP. Members of a work group for example would be assured that inter-group messages maintain the same level of security whether a member receives such messages on a desktop system or a mobile communication device.

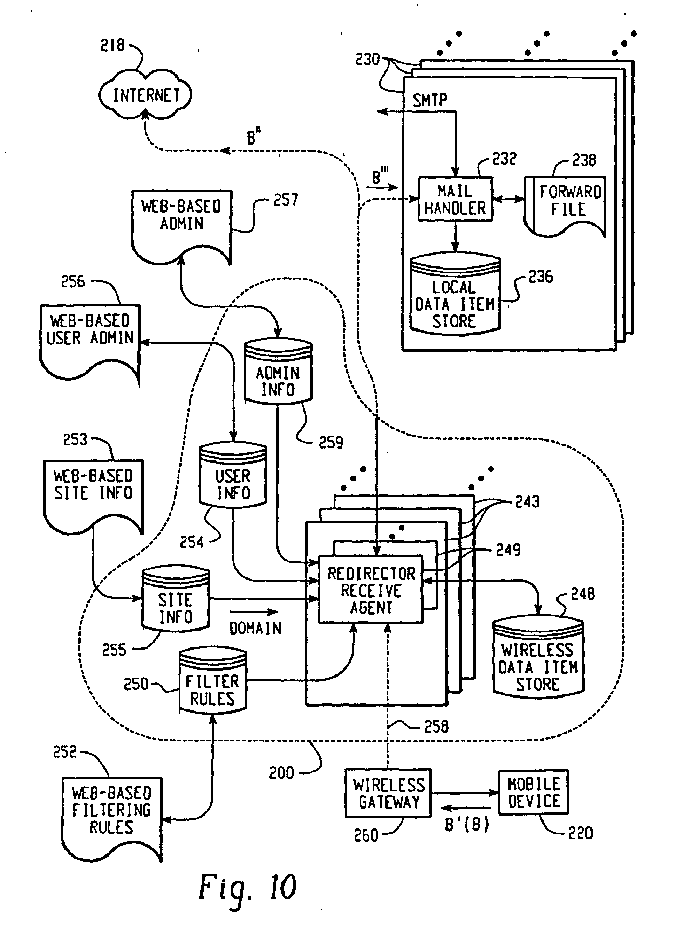

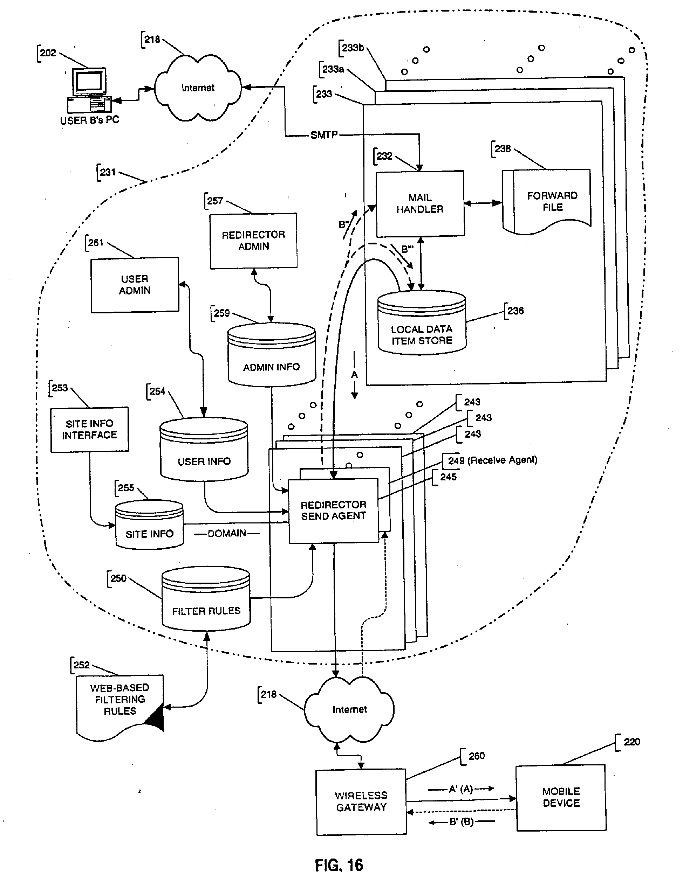

Where the redirector 242A is integrated with a messaging host system 231, redirection will typically be provided only for the particular service provider operating the messaging host system 231. However, the redirector 242A may be implemented with a distributed processing architecture, as shown in FIG. 16, to provide for redirection of data items for users on multiple domains hosted by the ISP, indicated as 233, 233a and 233b in FIG. 16. As described above in conjunction with FIGs. 9 and 10, the redirector program 242A may comprise multiple redirector send agents 245 and associated redirector receive agents 249, a pair of which can be hosted on separate redirector agent host servers 243, thereby providing for scaleable and easily configurable multiple-domain redirection. A single redirector agent host server can support several pairs of send and receive agents, each pair of agents preferably serving a domain site. In some implementations, more than one send/receive agent pair may serve a particular domain. It is also contemplated that a domain may be served by different numbers of send agents and receive agents.

The mapping of redirector host servers to domains and the configuration of redirector agents are accomplished via the administration arrangement 261 for the administration information database 259. Since the redirector is integrated with the messaging system, redirector administration 257 and redirector user administration 261 are preferably integrated within the messaging system. If remote administration of system 231 is desired, to allow users to access information in the user information store 254 for example, these administration functions may also be provided through web-based interfaces, as described above. The interface to site information in the database 255 is shown as internal to the messaging host system 231, since the ISP is hosting such sites, although a web-based interface may be provided where site managers represent ISP-hosted internet domains and manage corresponding site information records. User filter rules may be established by each user as described above and access to the filter agent 250 is therefore preferably provided through the web-based interface 252.

A mobile device user, when provided with an account, can preferably access the user information database 254 via web based user administration page (not shown), in order to update fields of their user information record for which they have authority. For instance, a user might wish to override a default E-mail tag line, thereby enabling the above tag-line customization feature. The user might also wish to override a default domain name based E-mail address by specifying an SMTP address, thereby enabling domain-massaging.

The system of FIG. 16 operates substantially as described above, except that new messages are retrieved from the local data item store 236 in the integrated messaging/redirection system in the messaging host system 231. The redirector send and receive agents can access the local store 236, such that the wireless data item store 248 is no longer required. Otherwise, the distributed system operates as described above.

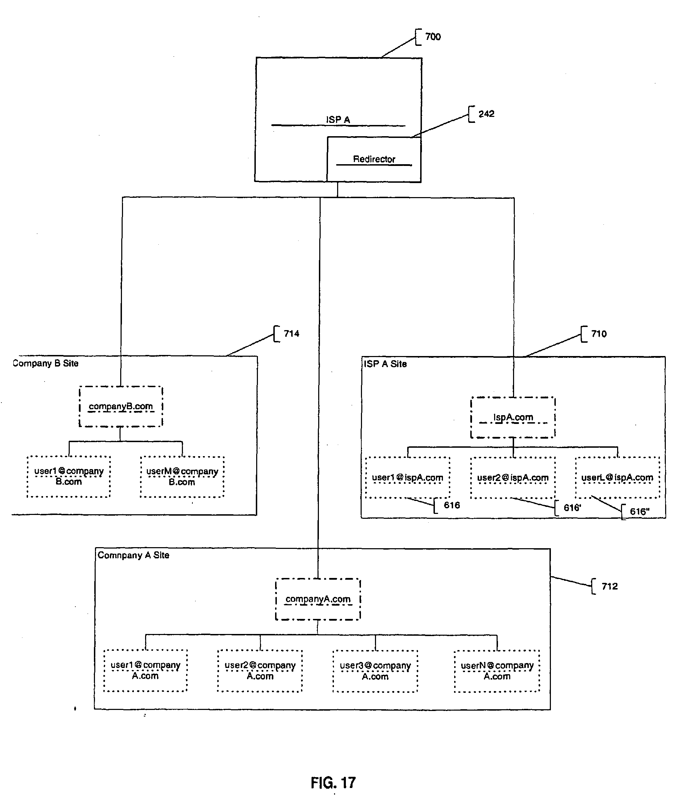

As illustrated in FIG. 17, the system of FIG. 16 advantageously permits an ISP, such as ISP A 700, to provide wireless redirection for its customer base and customized single E-mail address transparency for a plurality of companies, such as Company A and Company B, by managing a distinct site for each company, in this case ISP A site 710, Company A site 712, and Company B site 714. Mobile device users associated to each of those sites can configure their E-mail tag lines and E-mail addressees obtained by juxtaposing their E-mail name and their custom site's domain name, by taking advantage of the domain-massaging and tag line customization features. Secure communications between the redirector 242A and any mobile devices in accordance with an aspect of the invention may be particularly important to such ISP clients as Company A and Company B.

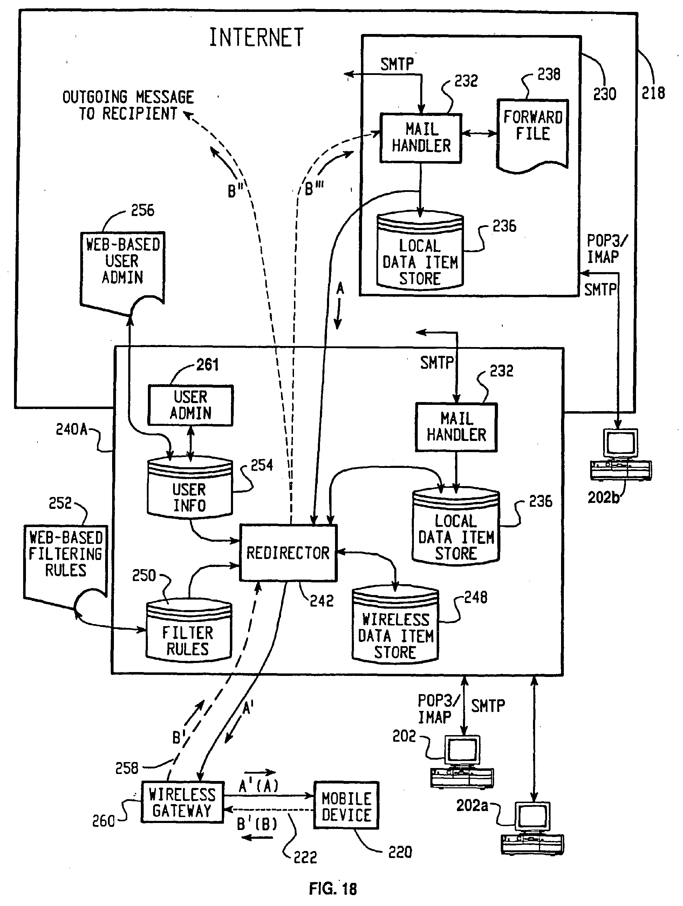

Although the integrated messaging/redirection system has been described above primarily in the context of providing for data item redirection for only a single ISP, including any domains hosted by the ISP, an ISP may extend its redirection services to other ISPs. Such an arrangement would effectively be a hybrid between the two-host system such as shown in FIG. 6 and the integrated system as shown for example in FIG. 14. The overall system diagram would be substantially as shown in FIG. 6, although the second host system 240 would be an integrated messaging/redirection system 240A as shown in FIG. 18. In such a system, the integrated ) messaging/redirection host system 240A provides messaging and redirection services to it own users 202 and 202a, while also providing redirection services for a different host system such as 230, having users such as 202b.

The messaging host system 230 is configured so as to forward a copy of incoming data items destined for the inbox of a user such as 202b to the integrated messaging/redirection host system 240A for redirection to the user's mobile device 220. Data items destined for users of the messaging host system 230 having a mobile communication device are thereby continuously "pushed" to the integrated host system 240A as they arrive at the messaging host system 230. Upon arrival at the integrated host system 240A, the redirector 242 at the system 240A determines whether such data items are user-selected data items to be pushed to the user's mobile communications device 220.

The integrated host system 240A acts not only as an ISP and redirector for its own users and possibly users of domains hosted by the ISP, shown as 202 and 202a, but also as a gateway for data items received from the first host system 230 through the Internet 218 or other WAN. Redirection of data items destined for host 240A users such as 202 and 202a proceeds as described above, with the redirector 242 having direct access to the local data item store 236. The data or message flows relating to such redirection have therefore not been shown in FIG. 18. The solid and dashed lines respectively indicate the flows for data items A forwarded from the first host system 230 and data items B originating at a mobile device 220 for a user of the first host system 230.

The integrated host system 240A preferably includes, along with the typical hardware and software associated with an Internet gateway, the redirector 242 which itself may include a mail handler (not shown), preferably a sendmail daemon (not shown), and a local delivery agent (not shown), a plurality of wireless mail stores 248 (preferably one for each mobile user such as user 202b associated with an external ISP), a filter database 250, and a mobile user profile database 254.

This configuration is intended to be as non-obtrusive as possible to the messaging host system 230. The messaging host system 230 may be configured in many ways to detect such messages, as described above. For example, using the ".forward" file 238, new data items are detected and forwarded to the integrated host system 240A. Other methods of detecting and forwarding new data items destined for a user having a mobile communications device 220 could also be used.

If the redirector 242 is activated at the integrated host system 240A, and has been configured by the user to replicate certain user data items (such as message A) to the mobile communications device 220, when the message A is received at the integrated host system 240A, the redirector program 242 detects message A and prepares the message for a second redirection to the mobile device 220. As described above, the message may be compressed and encrypted before being repackaged into an outer envelope for redirection through the wireless gateway 260 and wireless network 222 to the mobile device 220. The mobile device then removes the outer envelope, decompresses and decrypts received data items as required.

Users such as 202 and 202a, "native" to the integrated host 240A, may be configured for redirection by a system 240A administrator, through the internal user administration 261. External redirection users such as 202b would preferably be configured with a web-based user administration tool 256. However, the ISP or operator of the integrated system 240A may also maintain at least partial control over the administration of external users through either the web-based administration tool 256 or internal administration arrangement 261. It is contemplated that administrative functions for external redirection users may require coordination between administrators of the integrated host system 240A and the external host system 230.

The filtering rules stored by filter agent 250 are established by each user 202, 202a, 202b through the web-based interface 252. Regardless of whether a user is native or external to the ISP operating the integrated host 240A, once the user has been configured by system administrators to enable redirection functions, filter rules may be established via the preferably secure web interface 252 and stored to filter agent 250.

When a user of host system 230 has been configured for redirection of data items to a mobile device 220 through the integrated system 240A, the redirector 242 operates substantially as described above and shown in FIG. 8 to redirect data items to and from the user's mobile device 220.

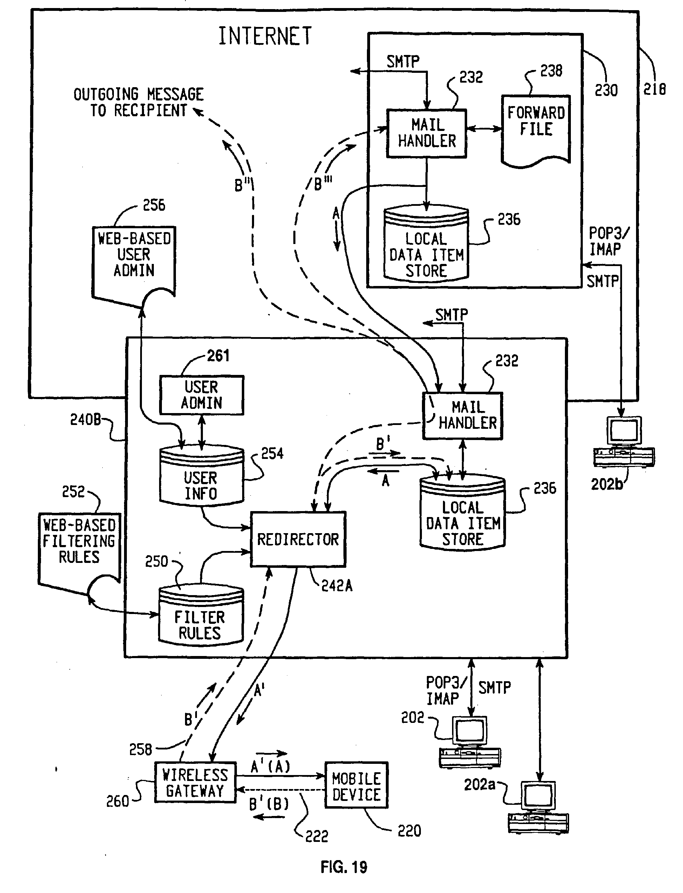

Since the redirector 242 is integrated with a messaging system in the system shown in FIG. 18, the existing messaging system components such as the mail handler 232, delivery agents (not shown) and data item store 236 may be used by the redirector and the first host system 230 to communicate redirected data items. Such a system is shown in FIG. 19. The redirector 242A, as described above, need not incorporate its own mail handler in this embodiment, as described above. Redirected data item transfer is accomplished through the mail handler 232 and delivery agents (not shown) in the integrated host system 240B. A further advantage of the integrated host system 240B in FIG. 19 is that the redirector 242A directly accesses the local data item store 236, thereby simplifying new data item detection and eliminating the wireless data item store 248.

Having described in detail several preferred embodiments of the present invention, including preferred methods of operation, it is to be understood that this operation could be carried out with different elements and steps. Many variations on the invention will be obvious to those knowledgeable in the field, and such obvious variations are within the scope of the invention as claimed.

For example, further security measures may be implemented to provide for end-to-end secure data item transfer, including redirection. Communications between a messaging host system such as 230 and a wireless redirector host system 240, 240A, 240B, may be protected by using a secure E-mail scheme such as so-called Pretty Good Privacy® (PGP®). Alternatively, the public key encryption arrangements described above may also be extended to provide for secure communications between any sender (including a sender such as user A, external to the messaging host system 230, 231) and the messaging host system 230, 231 or integrated host system 240A, 240B. In such systems, the redirector may simply repackage a received encrypted data item for forwarding to or from a mobile device, since the data item has already been encrypted.

Also, although the system diagrams show multiple connections between the various components, those skilled in the art will appreciate that such connections are intended primarily to illustrate data flows. In actual system implementations, data item transfer between the redirector 242A and the local data item store 236 may be accomplished using a single connection. Similarly, the redirector 242, 242A is preferably connected to the wireless gateway 260 through a single connection. This single connection is most preferably maintained open when established, thereby providing for near real-time data item redirection and "always on, always connected"® functionality for all mobile devices 220.

## Claims

1. A method of redirecting data items from a messaging host system (230) to a user's mobile device (220), comprising the steps of:
detecting a new data item for the user at the messaging host system (230);
forwarding a copy of the new data item to a redirector host system (240);
determining whether the new data item should be redirected from the redirector host system (240) to the user's mobile device (220);
if the new data item should be redirected, then
encrypting the new data item to form an encrypted new data item using a cipher algorithm and an encryption key; and
packaging the encrypted new data item into an electronic envelope and
transmitting the electronic envelope to the user's mobile device (220);
receiving the electronic envelope at the user's mobile device (220);
extracting the encrypted new data item from the electronic envelope; and
decrypting the encrypted new data item to recover the new data item using a cipher algorithm and a decryption key;
**characterized by** the steps of:
generating the encryption key at a computer system (202) having a secure communications link with the mobile device (220);
forwarding the encryption key from the computer system (202) to the redirector host system (240) using a secure message transfer;
generating the decryption key at the computer system (202); and
forwarding the decryption key from the computer system (202) to the mobile device (220) using the secure communications link.

2. The method of claim 1, further comprising the step of:
storing the new data item in a user's inbox coupled to the messaging host system (230).

3. The method of claim 1, wherein the detecting step includes the steps of:
determining whether a new data item has been received at the messaging host system (230) for a particular user; and
checking a forwarding file coupled to the messaging host system (230) to determine whether the particular user's data items should be redirected to the redirector host system (240).

4. The method of claim 3, wherein the forwarding file includes a list of system addresses where the user's data items should be forwarded by the messaging host system (230).

5. The method of claim 1, further comprising the steps of:
providing an inbox for the user, wherein the inbox is coupled to the messaging host system (230); and
forwarding a copy of the new data item to the user's inbox on the messaging host system (230).

6. The method of claim 1, further comprising the steps of:
configuring a set of filtering rules for use by the redirector host system (240) in determining whether the new data item should be redirected to the user's mobile device (220); and
providing an access mechanism that allows the user to remotely configure and reconfigure the set of filtering rules.

7. The method of claim 1, further comprising the steps of:
configuring a user profile database for use by the redirector host system (240) in determining whether the new data item should be redirected to the user's mobile data device (220); and
providing an access mechanism that allows a system administrator of the messaging host system (230) to remotely configure and reconfigure the user profile database.

8. The method of claim 1, further comprising the step of :
storing the new data item within a memory of the mobile device (220).

9. The method of claim 1, wherein the step of forwarding the decryption key comprises:
sending the decryption key to the mobile device (220) over a serial connection (203) between the computer system (202) and the mobile device (220).

10. The method of claim 1, further comprising the steps of:
generating a private key to be used as the decryption key at the computer system (202);
forwarding the private key from the computer system (202) to the mobile device (220) using the secure communications link;
generating a public key to be used as the encryption key at the computer system (202); and
forwarding the public key from the computer system (202) to a public key repository (205).

11. The method of claim 10, further comprising the step of:
forwarding the public key from the computer system (202) to the redirector host system (240).

12. The method of claim 1, further comprising the steps of:
preparing a reply data item at the mobile device (220) that is related to the new data item;
encrypting the reply data item at the mobile device (220) to form an encrypted reply data item; and
packaging the encrypted reply data item into an electronic envelope and transmitting the electronic envelope to the redirector host system (240).

13. The method of claim 12, wherein the electronic envelope packaged with the encrypted reply data item is addressed using an electronic address of the redirector host system (240).

14. The method of claim 13, further comprising the steps of:
extracting the encrypted reply data item from the electronic envelope at the redirector host system (240);
decrypting the extracted, encrypted reply data item to recover the reply data item;
reconfiguring addressing information associated with the reply data item; and
transmitting the reconfigured reply data item to the messaging host system (230).

15. The method of claim 14, further comprising the steps of:
receiving the reconfigured reply data item at the messaging host system (230); and
storing the reply data item in a user's inbox coupled to the messaging host system (230).

16. The method of claim 13, further comprising the steps of:
extracting the encrypted reply data item from the electronic envelope at the redirector host system (240);
decrypting the extracted, encrypted reply data item to recover the reply data item;
reconfiguring addressing information associated with the reply data item; and
transmitting the reconfigured reply data item to a destination system using an electronic address included in the reply data item.

17. The method of claim 1, further comprising the steps of:
providing the user's mobile device (220) with an interface to a wireless data network (222);
forwarding the electronic envelope from the redirector host system (240) to a wireless gateway system (260); and
transmitting the electronic envelope from the wireless gateway system (260) to the user's mobile device (220) using the wireless data network (222).

18. The method of claim 1, further comprising the steps of:
transmitting a deactivation message from the user to the redirector host system (240); and
upon receiving the deactivation message, prohibiting the redirection of data items for the user sending the deactivation message.

19. The method of claim 1, wherein the determining step includes the steps of:
accessing a user profile database including a list of authorized users; and
checking whether the user associated with the new data item is an authorized user to determine whether the new data item should be redirected to the user's mobile device (220).

20. The method of claim 1, wherein the determining step includes the steps of:
accessing a filter rules database including a list of filters to be applied to data items for a particular user; and
applying the filters to the new data item to determine whether the new data item should be redirected to the user's mobile device (220).

21. The method of claim 1, wherein the packaging step includes the step of addressing the electronic envelope using the electronic address of the user's mobile device (220).

22. The method of claim 1, wherein the data items are E-mail messages, and wherein the messaging host system (230) is an E-mail host system.

23. The method of claim 1, wherein the user's mobile device (220) is a laptop computer.

24. The method of claim 1, wherein the user's mobile device (220) is a two-way paging computer.

25. The method of claim 24, wherein the two-way paging computer includes a wireless network interface for communicating with the redirector host system (240) via a wireless data network (222).

26. The method of claim 25, wherein the redirector host system (240) is coupled to the wireless data network (222) via a wireless gateway system (260).

27. The method of claim 26, wherein the electronic envelope is addressed using the wireless data network address of the two-way paging computer.

28. The method of claim 1, wherein the messaging host system (230) is an Internet Service Provider.

29. The method of claim 28, wherein the data items are E-mail messages, and wherein the Internet Service Provider includes a mail server program.

30. The method of claim 29, wherein the Internet Service Provider further includes a forwarding database coupled to the mail server program for detecting whether a new data item received at the mail server should be forwarded to a redirector host system (240), and for determining the electronic address of that redirector host system (240).

31. The method of claim 1, wherein the messaging host system (230) and the redirector host system (240) are coupled via the Internet (218).

32. The method of claim 1, wherein the redirector host system (240) includes a further messaging host system.

33. The method of claim 1, wherein the redirector host system (240) is incorporated with the messaging host system.

34. The method of claim 6, wherein the access mechanism for remotely configuring and reconfiguring the filtering rules is a web-page interface.

35. The method of claim 7, wherein the access mechanism for remotely configuring and reconfiguring the user profile database is a web-page interface.

36. The method of claim 1, further comprising the steps of:
configuring a user profile database for use by the redirector host system (240) in determining whether the new data item should be redirected to the user's mobile data device (220); and
storing, within the user profile database, the electronic address of the user's mobile device (220).

37. The method of claim 36, further comprising the step of:
storing, within the user profile database, information regarding the type and configuration of the user's mobile device (220).

38. The method of claim 1, wherein the packaging step further includes the steps of:
converting the encrypted new data item into a compressed format; and
placing the compressed new data item into an electronic envelope that is addressed using the electronic address of the user's mobile device (220).

39. A system for redirecting data items from a messaging host system (230) to a user's mobile device (220), comprising
means for detecting a new data item for the user at the messaging host system (230);
means for forwarding a copy of the new data item to a redirector host system (240);
means for determining whether the new data item should be redirected from the redirector host system (240) to the user's mobile device (220) and, if the new data item should be redirected, for activating:
means for encrypting the new data item to form an encrypted new data item using a cipher algorithm and an encryption key;
means for packaging the encrypted new data item into an electronic envelope; and
means for transmitting the electronic envelope to the user's mobile device (220);
wherein the user's mobile device (220) comprises:
means for receiving the electronic envelope;
means for extracting the encrypted new data item from the electronic envelope; and
means decrypting the encrypted new data item to recover the new data item using a cipher algorithm and a decryption key;
the system being **characterized by**:
means for generating the encryption key at a computer system (202) having a secure communications link with the mobile device (220);
means for forwarding the encryption key from the computer system (202) to the redirector host system (240) using a secure message transfer;
means for generating the decryption key at the computer system (202); and
means for forwarding the decryption key from the computer system (202) to the mobile device (220) using the secure communications link.

40. The system of claim 39, wherein the means for forwarding the decryption key are configured to send the decryption key to the mobile device (220) over a serial connection (203) between the computer system (202) and the mobile device (220).

41. The system of claim 39, further comprising:
means for generating a private key to be used as the decryption key at the computer system (202);
means for forwarding the private key from the computer system (202) to the mobile device (220) using the secure communications link;
means for generating a public key to be used as the encryption key at the computer system (202); and
means for forwarding the public key from the computer system (202) to a public key repository (205).

42. The system of claim 41, further comprising:
means for forwarding the public key from the computer system (202) to the redirector host system (240).

## Patentansprüche

1. Verfahren zum Umleiten bzw. Weiterleiten von Datenelementen von einem Messaging-Hostsystem (230) an eine mobile Vorrichtung (220) eines Benutzers, das die Schritte aufweist:
Erfassen eines neuen Datenelements für den Benutzer an dem Messaging-Hostsystem (230);
Weiterleiten einer Kopie des neuen Datenelements an ein Redirector-Hostsystem (240);
Bestimmen, ob das neue Datenelement von dem Redirector-Hostsystem (240) an die mobile Vorrichtung (220) des Benutzers um- bzw. weitergeleitet werden soll;
wenn das neue Datenelement um- bzw. weitergeleitet werden soll, dann
Verschlüsseln des neuen Datenelements, um ein verschlüsseltes neues Datenelement zu bilden, unter Verwendung eines Chiffrieralgorithmus und eines Verschlüsselungsschlüssels; und
Verpacken des verschlüsselten neuen Datenelements in einen elektronischen Umschlag und Übertragen des elektronischen Umschlags an die mobile Vorrichtung (220) des Benutzers;
Empfangen des elektronischen Umschlags an der mobilen Vorrichtung (220) des Benutzers;
Extrahieren des verschlüsselten neuen Datenelements aus dem elektronischen Umschlag; und
Entschlüsseln des verschlüsselten neuen Datenelements, um das neue Datenelement wiederherzustellen, unter Verwendung eines Chiffrieralgorithmus und eines Entschlüsselungsschlüssels;
charakterisiert durch die Schritte:
Erzeugen des Verschlüsselungsschlüssels an einem Computersystem (202), das eine sichere Kommunikationsverbindung mit der mobilen Vorrichtung (220) hat;
Weiterleiten des Verschlüsselungsschlüssels von dem Computersystem (202) an das Redirector-Hostsystem (240) unter Verwendung einer sicheren Nachrichtenübertragung;
Erzeugen des Entschlüsselungsschlüssels an dem Computersystem (202); und
Weiterleiten des Entschlüsselungsschlüssels von dem Computersystem (202) an die mobile Vorrichtung (220) unter Verwendung der sicheren Kommunikationsverbindung.

2. Verfahren gemäß Anspruch 1, das weiter den Schritt aufweist:
Speichern des neuen Datenelements in einem Eingangsfach bzw. einer Inbox des Benutzers, das/die mit dem Messaging-Hostsystem (230) verbunden ist.

3. Verfahren gemäß Anspruch 1, wobei der Erfassungsschritt die Schritte umfasst:
Bestimmen, ob ein neues Datenelement an dem Messaging-Hostsystem (230) für einen bestimmten Benutzer empfangen wurde; und
Überprüfen einer mit dem Messaging-Hostsystem (230) verbundenen Weiterleitungsdatei, um zu bestimmen, ob die Datenelemente des bestimmten Benutzers an das Redirector-Hostsystem (240) um- bzw. weitergeleitet werden sollen.

4. Verfahren gemäß Anspruch 3, wobei die Weiterleitungsdatei eine Liste von Systemadressen umfasst, an welche die Datenelemente des Benutzers von dem Messaging-Hostsystem (230) weitergeleitet werden sollen.

5. Verfahren gemäß Anspruch 1, das weiter die Schritte aufweist:
Vorsehen einer Inbox für den Benutzer, wobei die Inbox mit dem Messaging-Hostsystem (230) verbunden ist; und
Weiterleiten einer Kopie des neuen Datenelements an die Inbox des Benutzers auf dem Messaging-Hostsystem (230).

6. Verfahren gemäß Anspruch 1, das weiter die Schritte aufweist:
Konfigurieren eines Satzes von Filterregeln zur Verwendung durch das Redirector-Hostsystem (240) bei der Bestimmung, ob das neue Datenelement an die mobile Vorrichtung (220) des Benutzers um- bzw. weitergeleitet werden soll; und
Vorsehen eines Zugriffsmechanismus, der dem Benutzer ermöglicht, den Satz von Filterregeln aus der Entfernung zu konfigurieren und neu zu konfigurieren.

7. Verfahren gemäß Anspruch 1, das weiter die Schritte aufweist:
Konfigurieren einer Benutzerprofil-Datenbank zur Verwendung durch das Redirector-Hostsystem (240) bei der Bestimmung, ob das neue Datenelement an die mobile Vorrichtung (220) des Benutzers um- bzw. weitergeleitet werden soll; und
Vorsehen eines Zugriffsmechanismus, der einem Systemadministrator des Messaging-Hostsystems (230) ermöglicht, die Benutzerprofil-Datenbank aus der Entfernung zu konfigurieren und neu zu konfigurieren.

8. Verfahren gemäß Anspruch 1, das weiter den Schritt aufweist:
Speichern des neuen Datenelements in einem Speicher der mobilen Vorrichtung (220).

9. Verfahren gemäß Anspruch 1, wobei der Schritt des Weiterleitens des Entschlüsselungsschlüssels umfasst:
Senden des Entschlüsselungsschlüssels an die mobile Vorrichtung (220) über eine serielle Verbindung (203) zwischen dem Computersystem (202) und der mobilen Vorrichtung (220).

10. Verfahren gemäß Anspruch 1, das weiter die Schritte aufweist:
Erzeugen eines privaten Schlüssels an dem Computersystem (202), der als der Entschlüsselungsschlüssel verwendet werden soll;
Weiterleiten des privaten Schlüssels von dem Computersystem (202) an die mobile Vorrichtung (220) unter Verwendung der sicheren Kommunikationsverbindung;
Erzeugen eines öffentlichen Schlüssels an dem Computersystem (202), der als der Verschlüsselungsschlüssel verwendet werden soll; und
Weiterleiten des öffentlichen Schlüssels von dem Computersystem (202) an ein Depot (205) für öffentliche Schlüssel.

11. Verfahren gemäß Anspruch 10, das weiter den Schritt aufweist:
Weiterleiten des öffentlichen Schlüssels von dem Computersystem (202) an das Redirector-Hostsystem (240).

12. Verfahren gemäß Anspruch 1, das weiter die Schritte aufweist:
Vorbereiten eines Antwortdatenelements, das sich auf das neue Datenelement bezieht, an der mobilen Vorrichtung (220);
Verschlüsseln des Antwortdatenelements an der an der mobilen Vorrichtung (220), um ein verschlüsseltes Antwortdatenelement zu bilden; und
Verpacken des verschlüsselten Antwortdatenelements in einen elektronischen Umschlag und Übertragen des elektronischen Umschlags an das Redirector-Hostsystem (240).

13. Verfahren gemäß Anspruch 12, wobei der elektronische Umschlag, mit dem das verschlüsselte Antwortdatenelement verpackt ist, unter Verwendung einer elektronischen Adresse des Redirector-Hostsystems (240) adressiert ist.

14. Verfahren gemäß Anspruch 13, das weiter die Schritte aufweist:
Extrahieren des verschlüsselten Antwortdatenelements aus dem elektronischen Umschlag an dem Redirector-Hostsystem (240);
Entschlüsseln des extrahierten verschlüsselten Antwortdatenelements, um das Antwortdatenelement wiederherzustellen;
Neukonfigurieren einer Adressierungsinformation, die zu dem Antwortdatenelement gehört; und
Übertragen des neu konfigurierten Antwortdatenelements an das Messaging-Hostsystem (230).

15. Verfahren gemäß Anspruch 14, das weiter die Schritte aufweist:
Empfangen des neu konfigurierten Antwortdatenelements an dem Messaging-Hostsystem (230); und
Speichern des Antwortdatenelements in einer Inbox eines Benutzers, die mit dem Messaging-Hostsystem (230) verbunden ist;

16. Verfahren gemäß Anspruch 13, das weiter die Schritte aufweist:
Extrahieren des verschlüsselten Antwortdatenelements aus dem elektronischen Umschlag an dem Redirector-Hostsystem (240);
Entschlüsseln des extrahierten verschlüsselten Antwortdatenelements, um das Antwortdatenelement wiederherzustellen;
Neukonfigurieren einer Adressierungsinformation, die zu dem Antwortdatenelement gehört; und
Übertragen des neu konfigurierten Antwortdatenelements an ein Zielsystem unter Verwendung einer elektronischen Adresse, die in dem Antwortdatenelement enthalten ist.

17. Verfahren gemäß Anspruch 1, das weiter die Schritte aufweist:
Vorsehen der mobilen Vorrichtung (220) des Benutzers mit einer Schnittstelle zu einem drahtlosen Datennetzwerk (222);
Weiterleiten des elektronischen Umschlags von dem Redirector-Hostsystem (240) an ein drahtloses Gateway-System (260); und
Übertragen des elektronischen Umschlags von dem drahtlosen Gateway-System (260) an die mobile Vorrichtung (220) des Benutzers unter Verwendung des drahtlosen Datennetzwerks (222).

18. Verfahren gemäß Anspruch 1, das weiter die Schritte aufweist:
Übertragen einer Deaktivierungsnachricht von dem Benutzer an das Redirector-Hostsystem (240); und
bei Empfang der Deaktivierungsnachricht Verhindern der Umleitung von Datenelementen für den Benutzer, der die Deaktivierungsnachricht sendet.

19. Verfahren gemäß Anspruch 1, wobei der Bestimmungsschritt die Schritte umfasst:
Zugreifen auf eine Benutzerprofil-Datenbank, die eine Liste von autorisierten Benutzern umfasst; und
Überprüfen, ob der zu dem neuen Datenelement gehörende Benutzer ein autorisierter Benutzer ist, um zu bestimmen, ob das neue Datenelement an die mobile Vorrichtung (220) des Benutzers um- bzw. weitergeleitet werden soll.

20. Verfahren gemäß Anspruch 1, wobei der Bestimmungsschritt die Schritte umfasst:
Zugreifen auf eine Filterregel-Datenbank mit einer Liste von Filtern, die auf Datenelemente für einen bestimmten Benutzer anzuwenden sind; und
Anwenden der Filter auf das neue Datenelement, um zu bestimmen, ob das neue Datenelement an die mobile Vorrichtung (220) des Benutzers um- bzw. weitergeleitet werden soll.

21. Verfahren gemäß Anspruch 1, wobei der Verpackungsschritt den Schritt der Adressierung des elektronischen Umschlags unter Verwendung der elektronischen Adresse der mobilen Vorrichtung (220) des Benutzers umfasst.

22. Verfahren gemäß Anspruch 1, wobei die Datenelemente E-Mail-Nachrichten sind und wobei das Messaging-Hostsystem (230) ein E-Mail-Hostsystem ist.

23. Verfahren gemäß Anspruch 1, wobei die mobile Vorrichtung (220) des Benutzers ein Laptop-Computer ist.

24. Verfahren gemäß Anspruch 1, wobei die mobile Vorrichtung (220) des Benutzers ein Zweiweg-Paging-Computer ist.

25. Verfahren gemäß Anspruch 24, wobei der Zweiweg-Paging-Computer eine drahtlose Netzwerkschnittstelle zur Kommunikation mit dem Redirector-Hostsystem (240) über ein drahtloses Datennetzwerk (222) umfasst.

26. Verfahren gemäß Anspruch 25, wobei das Redirector-Hostsystem (240) mit dem drahtlosen Datennetzwerk (222) über ein drahtloses Gateway-System (260) verbunden ist.

27. Verfahren gemäß Anspruch 26, wobei der elektronische Umschlag unter Verwendung der drahtlosen Datennetzwerkadresse des Zweiweg-Paging-Computers adressiert wird.

28. Verfahren gemäß Anspruch 1, wobei das Messaging-Hostsystem (230) ein Internetdiensteanbieter ist.

29. Verfahren gemäß Anspruch 28, wobei die Datenelemente E-Mail-Nachrichten sind und wobei der Internetdiensteanbieter ein Mail-Serverprogramm umfasst.

30. Verfahren gemäß Anspruch 29, wobei der Internetdiensteanbieter weiter eine Weiterleitungs-Datenbank umfasst, die mit dem Mail-Serverprogramm verbunden ist, um zu erfassen, ob ein an dem Mail-Server empfangenes neues Datenelement an das Redirector-Hostsystem (240) weitergeleitet werden soll, und um die elektronische Adresse dieses Redirector-Hostsystems (240) zu bestimmen.

31. Verfahren gemäß Anspruch 1, wobei das Messaging-Hostsystem (230) und das Redirector-Hostsystem (240) über das Internet (218) verbunden sind.

32. Verfahren gemäß Anspruch 1, wobei das Redirector-Hostsystem (240) ein weiteres Messaging-Hostsystem umfasst.

33. Verfahren gemäß Anspruch 1, wobei das Redirector-Hostsystem (240) gemeinsam mit dem Messaging-Hostsystem ausgebildet ist.

34. Verfahren gemäß Anspruch 6, wobei der Zugriffsmechanismus zum entfernten Konfigurieren und Neukonfigurieren der Filterregeln eine Webseiten-Schnittstelle ist.

35. Verfahren gemäß Anspruch 7, wobei der Zugriffsmechanismus zum entfernten Konfigurieren und Neukonfigurieren der Benutzerprofil-Datenbank eine Webseiten-Schnittstelle ist.

36. Verfahren gemäß Anspruch 1, das weiter die Schritte aufweist:
Konfigurieren einer Benutzerprofil-Datenbank zur Verwendung durch das Redirector-Hostsystem (240) bei der Bestimmung, ob das neue Datenelement an die mobile Vorrichtung (220) des Benutzers um- bzw. weitergeleitet werden soll; und
Speichern der elektronischen Adresse der mobilen Vorrichtung (220) des Benutzers in der Benutzerprofil-Datenbank.

37. Verfahren gemäß Anspruch 36, das weiter den Schritt aufweist:
Speichern einer Information hinsichtlich des Typs und der Konfiguration der mobilen Vorrichtung (220) des Benutzers in der Benutzerprofil-Datenbank.

38. Verfahren gemäß Anspruch 1, wobei der Verpackungsschritt weiter die Schritte aufweist:
Umwandeln des verschlüsselten neuen Datenelements in ein komprimiertes Format; und
Platzieren des komprimierten neuen Datenelements in einem elektronischen Umschlag, der unter Verwendung der elektronischen Adresse der mobilen Vorrichtung (220) des Benutzers adressiert ist.

39. System zum Umleiten bzw. Weiterleiten von Datenelementen von einem Messaging-Hostsystem (230) an eine mobile Vorrichtung (220) eines Benutzers, wobei das System aufweist
Mittel zum Erfassen eines neuen Datenelements für den Benutzer an dem Messaging-Hostsystem (230);
Mittel zum Weiterleiten einer Kopie des neuen Datenelements an ein Redirector-Hostsystem (240);
Mittel zum Bestimmen, ob das neue Datenelement von dem Redirector-Hostsystem (240) an die mobile Vorrichtung (220) des Benutzers um- bzw. weitergeleitet werden soll, und wenn das neue Datenelement um- bzw. weitergeleitet werden soll, zum Aktivieren von:
Mitteln zum Verschlüsseln des neuen Datenelements, um ein verschlüsseltes neues Datenelement zu bilden, unter Verwendung eines Chiffrieralgorithmus und eines Verschlüsselungsschlüssels;
Mitteln zum Verpacken des verschlüsselten neuen Datenelements in einen elektronischen Umschlag; und
Mitteln zum Übertragen des elektronischen Umschlags an die mobile Vorrichtung (220) des Benutzers;
wobei die mobile Vorrichtung (220) des Benutzers aufweist:
Mittel zum Empfangen des elektronischen Umschlags;
Mittel zum Extrahieren des verschlüsselten neuen Datenelements aus dem elektronischen Umschlag; und
Mittel zum Entschlüsseln des verschlüsselten neuen Datenelements, um das neue Datenelement wiederherzustellen, unter Verwendung eines Chiffrieralgorithmus und eines Entschlüsselungsschlüssels;
wobei das System charakterisiert ist durch:
Mittel zum Erzeugen des Verschlüsselungsschlüssels an einem Computersystem (202), das eine sichere Kommunikationsverbindung mit der mobilen Vorrichtung (220) hat;
Mittel zum Weiterleiten des Verschlüsselungsschlüssels von dem Computersystem (202) an das Redirector-Hostsystem (240) unter Verwendung einer sicheren Nachrichtenübertragung;
Mittel zum Erzeugen des Entschlüsselungsschlüssels an dem Computersystem (202); und
Mittel zum Weiterleiten des Entschlüsselungsschlüssels von dem Computersystem (202) an die mobile Vorrichtung (220) unter Verwendung der sicheren Kommunikationsverbindung.

40. System gemäß Anspruch 39, wobei die Mittel zum Weiterleiten des Entschlüsselungsschlüssels konfiguriert sind, den Entschlüsselungsschlüssel an die mobile Vorrichtung (220) über eine serielle Verbindung (203) zwischen dem Computersystem (202) und der mobilen Vorrichtung (220) zu senden.

41. System gemäß Anspruch 39, das weiter aufweist:
Mittel zum Erzeugen eines privaten Schlüssels an dem Computersystem (202), der als der Entschlüsselungsschlüssel verwendet werden soll;
Mittel zum Weiterleiten des privaten Schlüssels von dem Computersystem (202) an die mobile Vorrichtung (220) unter Verwendung der sicheren Kommunikationsverbindung;
Mittel zum Erzeugen eines öffentlichen Schlüssels an dem Computersystem (202), der als der Verschlüsselungsschlüssel verwendet werden soll; und
Mittel zum Weiterleiten des öffentlichen Schlüssels von dem Computersystem (202) an ein Depot (205) für öffentliche Schlüssel.

42. System gemäß Anspruch 41, das weiter aufweist:
Mittel zum Weiterleiten des öffentlichen Schlüssels von dem Computersystem (202) an das Redirector-Hostsystem (240).

## Revendications

1. Procédé de redirection d'articles de données d'un système hôte de messagerie (230) à un dispositif mobile d'utilisateur (220), comprenant les étapes consistant à :
détecter un nouvel article de données pour l'utilisateur au niveau du système hôte de messagerie (230) ;
transférer une copie du nouvel article de données à un système hôte redirecteur (240) ;
déterminer si le nouvel article de données doit être redirigé du système hôte redirecteur (240) au dispositif mobile de l'utilisateur (220) ;
si le nouvel article de données doit être redirigé, alors
chiffrer le nouvel article de données pour former un nouvel article de données chiffré en utilisant un algorithme de chiffrement et une clé de chiffrement ; et
envelopper le nouvel article de données chiffré dans une enveloppe électronique et transmettre l'enveloppe électronique au dispositif mobile de l'utilisateur (220) ;
recevoir l'enveloppe électronique au niveau du dispositif mobile de l'utilisateur (220) ;
extraire le nouvel article de données chiffré de l'enveloppe électronique ; et
déchiffrer le nouvel article de données chiffré pour récupérer le nouvel article de données en utilisant un algorithme de chiffrement et une clé de déchiffrement ;
**caractérisé par** les étapes consistant à :
générer la clé de chiffrement au niveau d'un système informatique (202) ayant une liaison de communications sécurisée avec le dispositif mobile (220) ;
transférer la clé de chiffrement du système informatique (202) au système hôte redirecteur (240) en utilisant un transfert de message sécurisé ;
générer la clé de déchiffrement au niveau du système informatique (202) ; et
transférer la clé de déchiffrement du système informatique (202) au dispositif mobile (220) en utilisant la liaison de communications sécurisée.

2. Procédé selon la revendication 1, comprenant en outre l'étape consistant à :
stocker le nouvel article de données dans une boîte de réception d'utilisateur couplée au système hôte de messagerie (230).

3. Procédé selon la revendication 1, dans lequel l'étape de détection comprend les étapes consistant à :
déterminer si un nouvel article de données a été reçu au niveau du système hôte de messagerie (230) pour un utilisateur particulier ; et
vérifier un fichier de transfert couplé au système hôte de messagerie (230) pour déterminer si les articles de données de l'utilisateur particulier doivent être redirigés vers le système hôte redirecteur (240).

4. Procédé selon la revendication 3, dans lequel le fichier de transfert comprend une liste d'adresses système où les articles de données de l'utilisateur doivent être transférés par le système hôte de messagerie (230).

5. Procédé selon la revendication 1, comprenant en outre les étapes consistant à :
fournir une boîte de réception à l'utilisateur, la boîte de réception étant couplée au système hôte de messagerie (230) ; et
transférer une copie du nouvel article de données à la boîte de réception de l'utilisateur sur le système hôte de messagerie (230).

6. Procédé selon la revendication 1, comprenant en outre les étapes consistant à :
configurer un ensemble de règles de filtrage pour l'utilisation par le système hôte redirecteur (240) en déterminant si le nouvel article de données doit être redirigé vers le dispositif mobile de l'utilisateur (220) ; et
fournir un mécanisme d'accès qui permet à l'utilisateur de configurer et de reconfigurer à distance l'ensemble de règles de filtrage.

7. Procédé selon la revendication 1, comprenant en outre les étapes consistant à :
configurer une base de données de profils d'utilisateur pour l'utilisation par le système hôte redirecteur (240) en déterminant si le nouvel article de données doit être redirigé vers le dispositif de données mobile de l'utilisateur (220) ; et
fournir un mécanisme d'accès qui permet à un administrateur système du système hôte de messagerie (230) de configurer et de reconfigurer à distance la base de données de profils d'utilisateur.

8. Procédé selon la revendication 1, comprenant en outre l'étape consistant à:
stocker le nouvel article de données dans une mémoire du dispositif mobile (220).

9. Procédé selon la revendication 1, dans lequel l'étape de transfert de la clé de déchiffrement comprend :
l'envoi de la clé de déchiffrement au dispositif mobile (220) sur une connexion série (203) entre le système informatique (202) et le dispositif mobile (220).

10. Procédé selon la revendication 1, comprenant en outre les étapes consistant à :
générer une clé privée devant être utilisée comme clé de déchiffrement au niveau du système informatique (202) ;
transférer la clé privée du système informatique (202) au dispositif mobile (220) en utilisant la liaison de communications sécurisée ;
générer une clé publique devant être utilisée comme clé de chiffrement au niveau du système informatique (202) ; et
transférer la clé publique du système informatique (202) à un référentiel de clés publiques (205).

11. Procédé selon la revendication 10, comprenant en outre l'étape consistant à :
transférer la clé publique du système informatique (202) au système hôte redirecteur (240).

12. Procédé selon la revendication 1, comprenant en outre les étapes consistant à :
préparer un article de données de réponse au niveau du dispositif mobile (220) qui est lié au nouvel article de données ;
chiffrer l'article de données de réponse au niveau du dispositif mobile (220) pour former un article de données de réponse chiffré ; et
envelopper l'article de données de réponse chiffré dans une enveloppe électronique et transmettre l'enveloppe électronique au système hôte redirecteur (240).

13. Procédé selon la revendication 12, dans lequel l'enveloppe électronique contenant l'article de données de réponse chiffré est adressée en utilisant une adresse électronique du système hôte redirecteur (240).

14. Procédé selon la revendication 13, comprenant en outre les étapes consistant à :
extraire l'article de données de réponse chiffré de l'enveloppe électronique au niveau du système hôte redirecteur (240) ;
déchiffrer l'article de données de réponse chiffré, extrait pour récupérer l'article de données de réponse ;
reconfigurer l'information d'adressage associée à l'article de données de réponse ; et
transmettre l'article de données de réponse reconfiguré au système hôte de messagerie (230).

15. Procédé selon la revendication 14, comprenant en outre les étapes consistant à :
recevoir l'article de données de réponse reconfiguré au niveau du système hôte de messagerie (230) ; et
stocker l'article de données de réponse dans une boîte de réception d'utilisateur couplée au système hôte de messagerie (230).

16. Procédé selon la revendication 13, comprenant en outre les étapes consistant à :
extraire l'article de données de réponse chiffré de l'enveloppe électronique au niveau du système hôte redirecteur (240) ;
déchiffrer l'article de données de réponse chiffré, extrait pour récupérer l'article de données de réponse ;
reconfigurer l'information d'adressage associée à l'article de données de réponse ; et
transmettre l'article de données de réponse reconfiguré à un système de destination en utilisant une adresse électronique incluse dans l'article de données de réponse.

17. Procédé selon la revendication 1, comprenant en outre les étapes consistant à :
fournir au dispositif mobile de l'utilisateur (220) une interface à un réseau de données sans fil (222) ;
transférer l'enveloppe électronique du système hôte redirecteur (240) à un système de passerelle sans fil (260) ; et
transmettre l'enveloppe électronique du système de passerelle sans fil (260) au dispositif mobile de l'utilisateur (220) en utilisant le réseau de données sans fil (222).

18. Procédé selon la revendication 1, comprenant en outre les étapes consistant à :
transmettre un message de désactivation de l'utilisateur au système hôte redirecteur (240) ; et
à la réception du message de désactivation, empêcher la redirection d'articles de données pour l'utilisateur envoyant le message de désactivation.

19. Procédé selon la revendication 1, dans lequel l'étape de détermination comprend les étapes consistant à :
accéder à une base de données de profils d'utilisateur incluant une liste d'utilisateurs autorisés ; et
vérifier si l'utilisateur associé au nouvel article de données est un utilisateur autorisé pour déterminer si le nouvel article de données doit être redirigé vers le dispositif mobile de l'utilisateur (220).

20. Procédé selon la revendication 1, dans lequel l'étape de détermination comprend les étapes consistant à :
accéder à une base de données de règles de filtrage incluant une liste de filtres à appliquer à des articles de données pour un utilisateur particulier ; et
appliquer les filtres au nouvel article de données pour déterminer si le nouvel article de données doit être redirigé vers le dispositif mobile de l'utilisateur (220).

21. Procédé selon la revendication 1, dans lequel l'étape d'enveloppement comprend l'étape consistant à adresser l'enveloppe électronique en utilisant l'adresse électronique du dispositif mobile de l'utilisateur (220).

22. Procédé selon la revendication 1, dans lequel les articles de données sont des messages de courrier électronique, et dans lequel le système hôte de messagerie (230) est un système hôte de courrier électronique.

23. Procédé selon la revendication 1, dans lequel le dispositif mobile de l'utilisateur (220) est un ordinateur portable.

24. Procédé selon la revendication 1, dans lequel le dispositif mobile de l'utilisateur (220) est un ordinateur de radiomessagerie bidirectionnelle.

25. Procédé selon la revendication 24, dans lequel l'ordinateur de radiomessagerie bidirectionnelle comprend une interface réseau sans fil pour communiquer avec le système hôte redirecteur (240) via un réseau de données sans fil (222).

26. Procédé selon la revendication 25, dans lequel le système hôte redirecteur (240) est couplé au réseau de données sans fil (222) via un système de passerelle sans fil (260).

27. Procédé selon la revendication 26, dans lequel l'enveloppe électronique est adressée en utilisant l'adresse de réseau de données sans fil de l'ordinateur de radiomessagerie bidirectionnelle.

28. Procédé selon la revendication 1, dans lequel le système hôte de messagerie (230) est un fournisseur de services Internet.

29. Procédé selon la revendication 28, dans lequel les articles de données sont des messages de courrier électronique, et dans lequel le fournisseur de services Internet comprend un programme de serveur de courrier.

30. Procédé selon la revendication 29, dans lequel le fournisseur de services Internet comprend en outre une base de données de transfert couplée au programme de serveur de courrier pour détecter si un nouvel article de données reçu au niveau du serveur de courrier doit être transféré à un système hôte redirecteur (240), et pour déterminer l'adresse électronique de ce système hôte redirecteur (240).

31. Procédé selon la revendication 1, dans lequel le système hôte de messagerie (230) et le système hôte redirecteur (240) sont couplés via Internet (218).

32. Procédé selon la revendication 1, dans lequel le système hôte redirecteur (240) comprend un autre système hôte de messagerie.

33. Procédé selon la revendication 1, dans lequel le système hôte redirecteur (240) est incorporé au système hôte de messagerie.

34. Procédé selon la revendication 6, dans lequel le mécanisme d'accès pour configurer et reconfigurer à distance les règles de filtrage est une interface de page web.

35. Procédé selon la revendication 7, dans lequel le mécanisme d'accès pour configurer et reconfigurer à distance la base de données de profils d'utilisateur est une interface de page web.

36. Procédé selon la revendication 1, comprenant en outre les étapes consistant à :
configurer une base de données de profils d'utilisateur pour l'utilisation par le système hôte redirecteur (240) en déterminant si le nouvel article de données doit être redirigé vers le dispositif de données mobile de l'utilisateur (220) ; et
stocker, dans la base de données de profils d'utilisateur, l'adresse électronique du dispositif mobile de l'utilisateur (220).

37. Procédé selon la revendication 36, comprenant en outre l'étape consistant à :
stocker, dans la base de données de profils d'utilisateur, des informations concernant le type et la configuration du dispositif mobile de l'utilisateur (220).

38. Procédé selon la revendication 1, dans lequel l'étape d'enveloppement comprend en outre les étapes consistant à :
convertir le nouvel article de données chiffré en un format compressé ; et
placer le nouvel article de données compressé dans une enveloppe électronique qui est adressée en utilisant l'adresse électronique du dispositif mobile de l'utilisateur (220).

39. Système pour rediriger des articles de données d'un système hôte de messagerie (230) à un dispositif mobile d'utilisateur (220), comprenant
des moyens pour détecter un nouvel article de données pour l'utilisateur au niveau du système hôte de messagerie (230) ;
des moyens pour transférer une copie du nouvel article de données à un système hôte redirecteur (240) ;
des moyens pour déterminer si le nouvel article de données doit être redirigé du système hôte redirecteur (240) au dispositif mobile de l'utilisateur (220) et, si le nouvel article de données doit être redirigé, pour activer :
des moyens pour chiffrer le nouvel article de données pour former un nouvel article de données chiffré en utilisant un algorithme de chiffrement et une clé de chiffrement ;
des moyens pour envelopper le nouvel article de données chiffré dans une enveloppe électronique ; et
des moyens pour transmettre l'enveloppe électronique au dispositif mobile de l'utilisateur (220) ; dans lequel le dispositif mobile de l'utilisateur (220) comprend :
des moyens pour recevoir l'enveloppe électronique;
des moyens pour extraire le nouvel article de données chiffré de l'enveloppe électronique ; et
des moyens pour déchiffrer le nouvel article de données chiffré pour récupérer le nouvel article de données en utilisant un algorithme de chiffrement et une clé de déchiffrement ;
le système étant **caractérisé par** :
des moyens pour générer la clé de chiffrement au niveau d'un système informatique (202) ayant une liaison de communications sécurisée avec le dispositif mobile (220) ;
des moyens pour transférer la clé de chiffrement du système informatique (202) au système hôte redirecteur (240) en utilisant un transfert de message sécurisé ;
des moyens pour générer la clé de déchiffrement au niveau du système informatique (202) ; et
des moyens pour transférer la clé de déchiffrement du système informatique (202) au dispositif mobile (220) en utilisant la liaison de communications sécurisée.

40. Système selon la revendication 39, dans lequel les moyens pour transférer la clé de déchiffrement sont configurés pour envoyer la clé de déchiffrement au dispositif mobile (220) sur une connexion série (203) entre le système informatique (202) et le dispositif mobile (220).

41. Système selon la revendication 39, comprenant en outre :
des moyens pour générer une clé privée devant être utilisée comme clé de déchiffrement au niveau du système informatique (202) ;
des moyens pour transférer la clé privée du système informatique (202) au dispositif mobile (220) en utilisant la liaison de communications sécurisée ;
des moyens pour générer une clé publique devant être utilisée comme clé de chiffrement au niveau du système informatique (202) ; et
des moyens pour transférer la clé publique du système informatique (202) à un référentiel de clés publiques (205).

42. Système selon la revendication 41, comprenant en outre :
des moyens pour transférer la clé publique du système informatique (202) au système hôte redirecteur (240).
